(19) Europäisches Patentamt
European Patent Office
Office européen des brevets

(11) **EP 2 963 728 A1**

(12) **EUROPEAN PATENT APPLICATION**
published in accordance with Art. 153(4) EPC

(43) Date of publication:
**06.01.2016 Bulletin 2016/01**

(51) Int Cl.:
***H01M 10/44*** *(2006.01)*    ***H02J 7/00*** *(2006.01)*

(21) Application number: **13876282.8**

(22) Date of filing: **26.02.2013**

(86) International application number:
**PCT/JP2013/054837**

(87) International publication number:
**WO 2014/132321 (04.09.2014 Gazette 2014/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Hitachi, Ltd.**
**Chiyoda-ku**
**Tokyo 100-8280 (JP)**

(72) Inventors:
• **INABA Ryoh**
  **Chiyoda-ku**
  **Tokyo 100-8280 (JP)**
• **KOBAYASHI Yutaka**
  **Chiyoda-ku**
  **Tokyo 100-8280 (JP)**

(74) Representative: **MERH-IP Matias Erny Reichl**
**Hoffmann**
**Patentanwälte PartG mbB**
**Paul-Heyse-Strasse 29**
**80336 München (DE)**

(54) **POWER SOURCE DEVICE**

(57)    The production cost of a power source device is reduced by providing a first current control switch, of which the operation is controlled by a first control means and which limits a current flowing in a direction toward each of a plurality of first power storage device groups, for each of the plurality of first power storage device groups in which a plurality of power storage devices are electrically connected to each other in series or in parallel, or in series and parallel, and which are electrically connected to each other in parallel; and by providing a second current control switch, of which the operation is controlled by a second control means and which limits a current flowing in a direction opposite to the direction toward the plurality of first power storage device groups, for a power storage device group which includes the second power storage device group, in which the plurality of first power storage device groups are electrically connected to each other in parallel, and has a greater number of the power storage devices than the first power storage device group.

[Fig. 4]

## Description

### Technical Field

The present invention relates to a power source device.

### Background Art

As background art relating to the technical field, for example, there is a technique disclosed in Patent Literature 1.
Patent Literature 1 discloses a technique which is provided with a microcomputer in which a positive electrode terminal of a first battery block, to which a plurality of secondary batteries are connected in series, is connected to first and second field effect transistors in series, a positive electrode terminal of a second battery block, to which a plurality of secondary batteries are connected in series, is connected to third and fourth field effect transistors in series, the second and fourth field effect transistors are connected to charge/discharge positive electrode terminals, voltages of the first and second serial connection battery blocks are read, and the first to fourth field effect transistors are controlled. In the technique, the secondary battery is prevented from being damaged by an inrush current flowing due to the potential difference between a plurality of the serial connection battery blocks.

### Citation List

### Patent Literature

Patent Literature 1: JP-A-2007-166715

## Summary of Invention

### Technical Problem

In recent years, introduction of a system using electric energy has been increasing due to spread of motorization, strengthened measures for emergencies such as a disaster, promotion of using clean energy, or the like. Most systems using electric energy are provided with a power source device provided with a power storage device capable of accumulating electric energy.
However, the power source device provided with a power storage device is expensive compared to, for example, an inverter device that converts DC power to AC power. For this reason, there is strong demand for reduction of the production cost of the power source device provided with the power storage device.

### Solution to Problem

A representative problem to be solved is to reduce the production cost of the power source device.
The above-described representative problem can be solved by representative solving means, that is, by providing a first current control switch, of which the operation is controlled by a first control means and which limits a current flowing in a direction toward each of a plurality of first power storage device groups, for each of the plurality of first power storage device groups in which a plurality of power storage devices are electrically connected to each other in series or in parallel, or in series and parallel, and which are electrically connected to each other in parallel; and by providing a second current control switch, of which the operation is controlled by a second control means and which limits a current flowing in a direction opposite to the direction toward the plurality of first power storage device groups, for a power storage device group which includes a second power storage device group, in which the plurality of first power storage device groups are electrically connected to each other in parallel, and has a greater number of power storage devices than the first power storage device group.
Here, the first power storage device group is a protective range (unit) of power storage devices generated by first current control switches with respect to an inrush current, and indicates a range in which the inrush current flowing to a power storage device group with the lowest potential can be reliably blocked or controlled by the first current control switches such that the inrush current flowing to a power storage device group with the lowest potential does not exceed an allowable current of the power storage devices, based on the potential difference between groups of the plurality of power storage devices which are electrically connected to each other in parallel.
In addition, the second power storage device group is a range (unit) in which the plurality of first power storage device groups which are electrically connected to each other in parallel are electrically separated from a main circuit due to the second current control switch, and indicates a range of allowing stopping charging/discharging (no load) of power storage devices when the number of power storage devices, which are electrically connected to each other, is greater than that of the first power storage device group and when the power storage devices are replaced during load operation of the power source device, or a dispersion range when a plurality of power storage devices are dispersed and mounted in a mounting structure of a plurality of power storage devices, for example, a plurality of racks or a plurality of accommodation boxes.

**Advantageous Effects of Invention**

According to the representative solving means, it is not necessary to provide the second current control switch and the second control means in each of the power storage device groups which are electrically connected to each other in parallel, and therefore, it is possible to reduce the production cost of the power source device to that extent.

**Brief Description of Drawings**

[Fig. 1] Fig. 1 is a system configuration view that shows an overall configuration of a power source device consisting of power source strings with three phases.
[Fig. 2] Fig. 2 is a circuit diagram showing a configuration of a power source unit which is a constituent of the power source strings of Fig. 1.
[Fig. 3] Fig. 3 is a waveform diagram that shows an operation principle when one power source string is constituted of four power source units. Fig. 3 shows a corresponding relations between a control command for generating a rectangular wave-like output voltage of each of the power source units, the rectangular wave-like output voltage generated in each of the power source units, and an AC voltage (output voltage of the power source string) for one phase which is generated by synthesizing the output voltages of the power source units, with respect to temporal variation.
[Fig. 4] Fig. 4 is a circuit diagram that shows a configuration of an electricity storage unit which is a constituent of the power source unit in Fig. 2.
[Fig. 5] Fig. 5 is a connection diagram that shows an electrical connection configuration of a plurality of power storage devices constituting an electricity storage block which is a constituent of the electricity storage unit in Fig. 4.
[Fig. 6] Fig. 6 is a functional block that shows a configuration of an electricity storage control circuit which is a constituent of the electricity storage unit in Fig. 4.
[Fig. 7] Fig. 7 is a flowchart that shows a part of an operation of the power source device of Fig. 1.
[Fig. 8] Fig. 8 is a flowchart that shows operation subsequent to that of Fig. 7.
[Fig. 9] Fig. 9 is a flowchart that shows operation subsequent to that of Fig. 8.
[Fig. 10] Fig. 10 is a characteristic view that shows a correlation between a state of health (deterioration) (SOH) of a power storage device and DC internal resistance (DCR).
[Fig. 11] Fig. 11 is a characteristic view that shows a correlation between a state of charge (SOC) of a power storage device and an open (-circuit) voltage (OCV).
[Fig. 12] Fig. 12 is a circuit diagram showing a configuration of an electricity storage unit which is a constituent of a power source unit constituting power source strings of phases of a power source device.
[Fig. 13] Fig. 13 is a circuit diagram showing a configuration of an electricity storage unit which is a constituent of a power source unit constituting power source strings of phases of a power source device.
[Fig. 14] Fig. 14 is a characteristic view that shows a relationship between a gate application voltage of an Nch-type field-effect transistor and a resistance between a source and a drain.
[Fig. 15] Fig. 15 is a characteristic view that shows a relationship between a gate application voltage of a Pch-type field-effect transistor and a resistance between a source and a drain.

**Description of Embodiments**

An embodiment of the present invention will be described.

(General Description of Application of Invention)

Hereinafter, a case, in which the present invention is applied to a stationary power source device which is installed as a power storage device in a power generation farm together with a power generation system, for example, a solar power generation system or a wind power generation system, which uses renewable energy, will be described as an example of the present invention.

In the power generation system using renewable energy, the power generation capacity is affected by the natural environment such as the weather while there is an advantage in that the system imparts fewer burdens on the natural environment, and its output to the power system fluctuates. A stationary power source device is provided in order to suppress (alleviate) output variation. In a case where power output from the power generation system to the power system is insufficient with respect to a predetermined output power, the stationary power source device discharges power to supplement the insufficient power from the power generation. In a case where power output from the power generation system to the power system is in excess with respect to a predetermined power, the stationary power source device receives and is charged by, the excess power from the power generation.

The stationary power source device to which the present invention is applied can also be used as: a stationary power source device which is installed as an uninterruptible power source (backup power source) such as a server system of a data center or a communication facility; a stationary power source device that is installed as a power storage system which is provided for a consumer, stores nighttime power, and releases the stored power during the daytime to level the power load; and a stationary power source device which is electrically connected to the middle of a transmission/distribution system and is used as a countermeasure against variation in the power that is transmitted and distributed in the transmission/distribution system, a countermeasure against excess power, a countermeasure against frequencies, a countermeasure against a reverse power flow, or the like. In addition, the stationary power source device to which the present invention is applied can also be used as a mobile power source device which is installed in a mobile body and is used as a drive power source for the mobile body, a drive power source for driving the load loaded in the mobile body, or the like, not only for the stationary purpose.

As the moving body, there is an automobile, that is, a land vehicle (such as a passenger vehicle, a cargo automobile such as a truck, and an omnibus such as a bus), such as a hybrid electric automobile which has an engine and a motor as driving sources for the vehicle or a pure electric automobile which has only a motor as a driving source; a railroad vehicle such as a hybrid train in which the power is generated by motive power of a diesel engine and which has a motor driven by power obtained by the power generation as a driving source; and an industrial vehicle such as a construction machinery truck or a forklift truck.

The motor-driven system of a mobile body is provided with a motor that supplies a driving force to wheels or a driven body such as a mechanical load; a control device that controls driving of the motor; and a power source device that supplies power for driving the motor, as fundamental constituents.

The motor is a rotary electric machine, for example, a permanent magnet field-type or winding field-type three-phase AC synchronous motor or three-phase AC induction motor, which generates a rotational motive power by applying a magnetic action between an armature and a field magnet by receiving supply of three-phase AC power. In a case of a system specification of performing regeneration, the motor functions as a motor generator that also serves as a generator which generates three-phase AC power by being driven from a driven body.

The control device is a power conversion device that converts power, which is supplied through a power conversion circuit which is provided with a switching semiconductor element, to predetermined power, and for example, an inverter device which converts DC power of a power source device to three-phase AC power to supply the converted three-phase AC power to a motor. In the case of the system specification of performing regeneration, the control device functions as a converter device that performs AC-DC power conversion which converts the three-phase AC power supplied from the motor to DC power to supply the converted DC power to the power source device.

In some cases, another power conversion device is provided in the mobile body so as to electrically connect an external power source (for example, a commercial power source) or an external load (for example, a domestic electrical appliance) and a power source device to each other and to be able to transmit and receive power between the external power source or the external load and the power source device. When supplying power from the external power source to the power source device, the other power conversion device functions as a charging device and converts the power (for example, single-phase AC power at 100 volts or 200 volts which is supplied from domestic electrical outlet), which is supplied from the external power source, to DC power required for charging the power source device, to supply the converted DC power to the power source device. In addition, when supplying power from the power source device to the external load, the other power conversion device functions as a discharging device and converts the DC power which is supplied from the power source device to power (for example, single-phase AC power at 100 volts or 200 volts which is required for a domestic electrical appliance) required for the external load to supply the converted power to the external load.

(General Description of Power source Device)

The power source device is provided with an electricity storage system that accumulates (charges) and releases (discharges) electrical energy through an electrochemical action or by a charge storage structure of a plurality of power storage devices (secondary batteries or passive elements having capacitance).

The plurality of power storage devices are electrically connected to each other in series or in parallel or in series and parallel in accordance with specifications such as an output voltage or an electricity storage capacity required for the power source device.

It is preferable that a lithium-ion secondary battery is used as the power storage device. However, other secondary batteries such as a lead battery or a nickel hydrogen battery, or a hybrid secondary battery in which two kinds of power storage devices, for example, the lithium-ion secondary battery and the nickel hydrogen battery, are combined, may be used. As the passive element having capacitance, it is possible to use a capacitor, for example, an electric double-layered capacitor or a lithium-ion capacitor.

In recent years, introduction of the power generation system using renewable energy has been an urgent issue as an alternative power generation system for a nuclear power generation system or a thermal power generation system. It is essential to suppress the variation of the power generation system due to a juxtaposed stationary power source device in order for the power generation system using renewable energy stably to supply power to a power system like the nuclear power generation system or the thermal power generation system does. It is preferable to improve the performance of the stationary power source device and to efficiently transmit and receive power between the power system and the power generation system in order for the stationary power source device to sufficiently achieve the suppression of the variation of the power generation system.

As the stationary power source device, it is preferable to employ a multiplexing inverter-type stationary power source device in which a plurality of power source units, each of which is provided with an electricity storage unit having a power storage device, and a power control unit that controls input/output of power with respect to the electricity storage unit, are electrically connected to each other in series, and which is configured such that output voltages of the plurality of power source units are synthesized and output. According to the multiplexing inverter-type stationary power source device, it is possible to improve the efficiency of the power conversion. Therefore, it is possible to efficiently transmits and receive power between the power system and the power generation system and to improve the performance of the stationary power source device.

(Technical Problem in Embodiment)

Variation in a state of charge (SOC) is caused between a plurality of power storage devices due to individual difference of the power storage devices, difference in deterioration degree, or difference in the use environment (for example, temperature). In addition, when a power storage device is replaced, variation in the state of charge (SOC) is caused between a new power storage device and a used power storage device. In the power source device in which a plurality of power storage device groups, in which the plurality of power storage devices are electrically connected to each other in series or in series and parallel, are electrically connected to each other in parallel, a potential difference is caused between the plurality of power storage device groups due to the variation in the state of charge between the plurality of power storage devices. In addition, when a fault such as an internal short circuit is caused in a power storage device, a potential difference is caused between a power storage device group to which the power storage device belongs, and other power storage device groups. When the plurality of power storage device groups are electrically connected to each other in the state where such a potential difference is caused, an inrush current (also called a cross current) flows to the power storage device group having a power storage device with a low potential or a fault from a power storage device group not having a power storage device with a high potential or with a fault, based on the potential difference between the plurality of power storage device groups. If the potential difference between the plurality of power storage devices is great, it can also be considered that the inrush current becomes a current greater than or equal to an allowable current of the power storage device. If the inrush current greater than or equal to the allowable current flows in the power storage device, it can also be considered that abnormal heating or life deterioration is caused due to overcharge of the power storage device.

In the power source device in which the plurality of power storage device groups, in which the plurality of power storage devices are electrically connected to each other in series or in series and parallel, are electrically connected to each other in parallel, switches, for example, field effect transistors (MOSFET) are respectively provided in the plurality of power storage device groups, like in the background art. Accordingly, the plurality of power storage devices constituting the plurality of power storage device groups are protected from the inrush current due to the potential difference between the plurality of power storage device groups.

However, in the power source device in which the plurality of power storage device groups, in which the plurality of power storage devices are electrically connected to each other in series or in series and parallel, are electrically connected to each other in parallel, when employing the background art, two switches for discharging and charging need to be provided in each of the plurality of power storage device groups, a driving circuit for the two switches for discharging and charging needs to be provided in each of the plurality of power storage device groups, and N pieces of the charging switches, the discharging switches, and the driving circuits thereof are required in accordance with the number (N) of the plurality of power storage device groups. As a result, when employing the background art, the production cost for the charging switches, the discharging switches, and the driving circuits thereof increases by being multiplied by N.

The power source device is expensive compared to, for example, an inverter device that converts DC power to AC power. For this reason, there is strong demand for reduction of the production cost of the power source device. Accordingly, it is desirable to reduce the production cost in the power source device in which the plurality of power storage device groups, in which the plurality of power storage devices are electrically connected to each other in series or in series and parallel, are electrically connected to each other in parallel.

The above-described technical problem is not limited to the multiplexing inverter-type stationary power source device, and is a common problem also in the stationary power source device or a power source device for a mobile body, which is configured to have only an electricity storage unit from which a power control unit is separated.

(Solving Means for Solving Technical Problem)

It is necessary to provide a charging switch for each set (power storage device group) of a plurality of power storage devices which is determined from a protective range in which it is possible to reliably stop or control an inrush current flowing to a power storage device group with the lowest potential using the charging switch such that the inrush current flowing to the power storage device with the lowest potential does not exceed an allowable current of the power storage device, based on the potential difference between the plurality of power storage device groups which are electrically connected to each other in parallel. However, it is unnecessary to apply the same principle to a discharging switch. The discharging switch may be provided for each set (power storage device group) of a plurality of power storage device groups which is determined from a range of allowing stopping charging/discharging (no load) of power storage devices when the number of power storage devices is greater than that of the power storage device group, which is provided with the charging switches, and when the power storage devices are replaced during load operation of the power source device, or a dispersion range when a plurality of power storage devices are dispersed and mounted in a mounting structure of a plurality of power storage devices, for example, a plurality of racks or a plurality of accommodation boxes.

Based on such an idea, the solving means can be considered which is provided with a first current control switch, of which the operation is controlled by a first control means and which controls a current flowing in a direction toward each of a plurality of first power storage device groups, for each of the plurality of first power storage device groups in which a plurality of power storage devices are electrically connected to each other in series or in parallel, or in series and parallel, and which are electrically connected to each other in parallel; and provided with a second current control switch, of which the operation is controlled by a second control means and which controls a current flowing in a direction opposite to the direction toward the plurality of first power storage device groups, for a power storage device group which includes the second power storage device group, in which the plurality of first power storage device groups are electrically connected to each other in parallel, and has a greater number of the power storage devices than the first power storage device group.

(Effect from Solving Means)

According to the above-described solving means, it is possible to make the numbers of the second current control switches and the second control means be less than those of the first current control switches and the first control means. Therefore, it is possible to reduce the numbers of the second current control switches and the second control means compared to a case where the second current control switch of which the operation is controlled by the second control means and the first current control switch, of which the operation is controlled by the first control means, are provided in each of power storage device groups which are electrically connected to each other in parallel, and thus, it is possible to reduce the production cost of the power source device to that extent. The effect is significant as the number of first power storage device groups which are electrically connected to each other in parallel becomes greater, and in particular, as the size of the stationary power source device using the power storage device becomes larger.

Hereinafter, each example will be described with reference to accompanying drawings.

**Example 1**

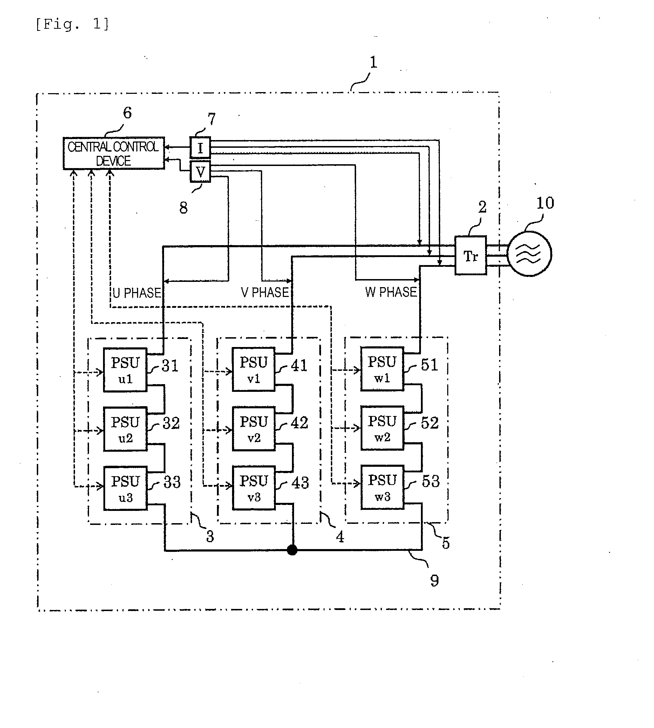

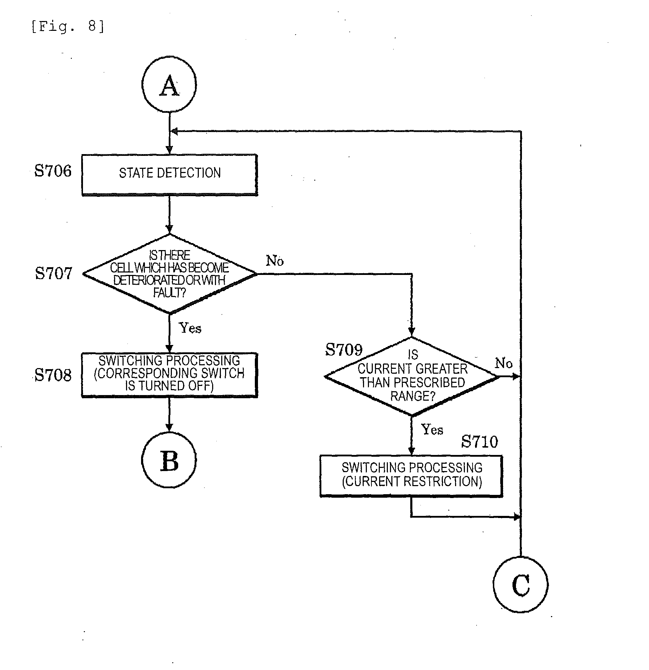

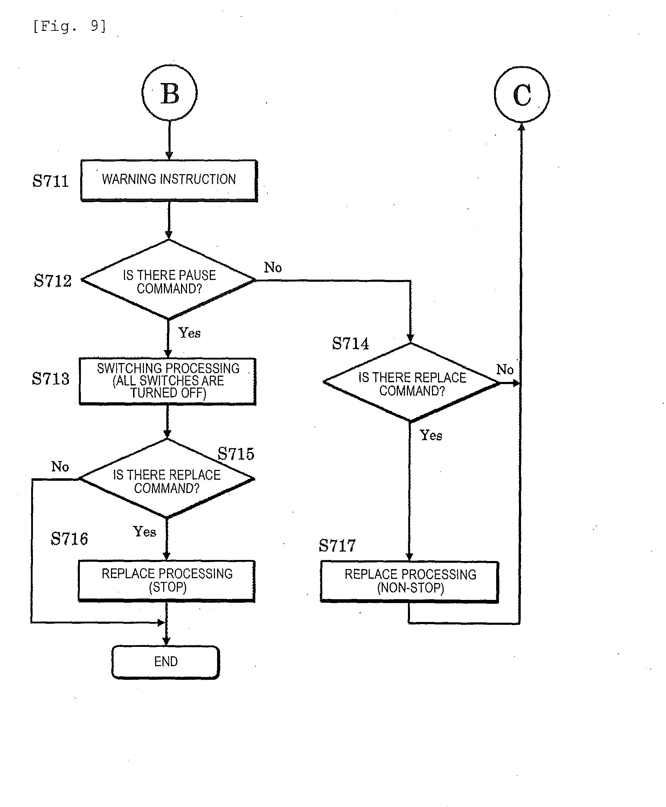

A first example will be described with reference to Figs. 1 to 10.

First, a system configuration of a stationary power source device 1 will be described with reference to Fig. 1.

(Configuration of Power System)

The reference numeral 10 in Fig. 1 indicates a power system in Fig. 1.

The power system 10 is a system which is used for supplying generated power to a power receiving facility of a consumer and in which each of systems for generation, transformation, transmission, and distribution of electricity are combined. The power generated by the power generation system is transmitted as high voltage three-phase AC power (U phase, V phase, and W phase), is transformed into a lower voltage when near the consumer, and when the power is distributed to the consumer, the power is distributed as low voltage three-phase AC power at 100 volts or 200 volts, or is distributed by being converted from the three-phase AC power to single-phase AC power.

As the power generation system, there is a nuclear power generation system, a thermal power generation system, and a hydroelectric power generation system. In addition, as the power generation system using renewable energy, there is a solar power generation system, a wind power generation system, or the like. It is possible to stably supply power using the nuclear power generation system, the thermal power generation system, or the like. However, in the power generation system using renewable energy, in some cases, the power generation capacity is affected by the natural environment such as the weather and the output varies, and therefore, it is impossible to stably supply the power. For this reason, when the power generation system using renewable energy is linked with the power system 10, it is desirable that means for suppressing the output variation of the power generation system is provided together with the power generation system so as to compensate for the amount of output variation of the power generation system and to suppress the output variation of the power generation system.

Therefore, in this example, the stationary power source device 1 (hereinafter, simply denoted as "power source device 1") is provided as the means for suppressing the output variation of the power generation system using renewable energy, together with the power generation system.

(Configuration of Power Source Device)

The power source device 1 is provided with an electricity storage system to be described later and is electrically connected to the power system 10 so as to have a connection relation electrically parallel to the power generation system.

In such a configuration, the power source device 1 can be made to function to compensate for (discharge) insufficient power of the power generation system by supplying power to the power system 10 in a case where the power output from the power generation system is insufficient with respect to required power on a load side, and to collect and accumulate (charge) excess power of the power generation system from the power system 10 in a case where the power output from the power generation system to the power system is in excess with respect to the required power on the load side.

In this manner, it is possible to suppress the output variation of the power generation system using renewable energy by making the power source device 1 function. In addition, it is possible to accumulate the excess power of the power generation system and use the accumulated excess power as the power for suppressing the output variation of the power generation system, and to effectively use the generated power in the power generation system.

The power source device 1 that can function as described above is provided with the electricity storage system which charges and discharges power, and a transforming system which transforms power which is transmitted and received between the electricity storage system and the power system 10, as main constituents.

(Configuration of Transforming System)

The transforming system is provided with a three-phase transformer 2 that transforms three-phase AC power, as a main constituent. The three-phase transformer 2 is a stationary induction device for transforming the power transmitted and received between the electricity storage system and the power system 10.

Although is not shown in the drawing, the three-phase transformer 2 is provided with an iron core corresponding to each of the phases. A primary winding and a secondary winding of a corresponding phase are wound around each iron core. The primary winding of each phase and the secondary winding of each phase are connected through a Y (star) connection system or a Δ (delta) connection system. In this example, a case where the primary winding of each phase and the secondary winding of each phase are connected through the Y (star) connection system will be described as an example.

The primary winding of the three-phase transformer 2 is a high-voltage side winding and is electrically connected to the power system 10. The secondary winding of the three-phase transformer 2 is a low-voltage side winding and is electrically connected to the electricity storage system. For this reason, when three-phase AC power is input from the electricity storage system to the secondary winding, the three-phase transformer 2 functions to transform the input three-phase AC power at a low voltage into three-phase AC power at a high voltage which is then output from the primary winding to the power system 10. Moreover, when the three-phase AC power is input from the power system 10 to the primary winding, the three-phase transformer functions to transform the input three-phase AC power at a high voltage into three-phase AC power at a low voltage which is then output from the secondary winding to the electricity storage system.

(Configuration of Electricity Storage System)

The electricity storage system is provided with power source strings 3 to 5, a central control device 6, a current measurement device 7, and a voltage measurement device 8, as main constituents, and transmits and receives three-phase AC power between the secondary winding (on a low voltage side) of the three-phase transformer 2 and the electricity storage system.

(Configuration of Power Source String)

Each of the power source strings 3 to 5 is provided corresponding to any phase of three-phase alternating currents. In this example, the power source string 3 corresponds to a U phase, the power source string 4 corresponds to a V phase, and the power source string 5 corresponds to a W phase.

The power source string 3 is provided with three power source units 31 to 33 and generates a rectangular wave-like voltage for generating an AC voltage of the corresponding U phase by sharing the voltage between the power source units 31 to 33. The three power source units 31 to 33 are electrically connected to each other in series. Accordingly, it is possible to synthesize and output the rectangular wave-like voltage generated in each of the three power source units 31 to 33.

Similarly, the power source string 4 is provided with three power source units 41 to 43 and generates a rectangular wave-like voltage for generating an AC voltage of the corresponding V phase by sharing the voltage between the power source units 41 to 43. The three power source units 41 to 43 are electrically connected to each other in series. Accordingly, it is possible to synthesize and output the rectangular wave-like voltage generated in each of the three power source units 41 to 43.

Similarly, the power source string 5 is provided with three power source units 51 to 53 and generates a rectangular wave-like voltage for generating an AC voltage of the corresponding W phase by sharing the voltage between the power source units 51 to 53. The three power source units 51 to 53 are electrically connected to each other in series. Accordingly, it is possible to synthesize and output the rectangular wave-like voltage generated in each of the three power source units 51 to 53.

The power source strings 3 to 5 are connected through the Y (star) connection system.

For this reason, one end of the electrical series connection between the three power source units 31 to 33 of the U phase, one end of the electrical series connection between the three power source units 41 to 43 of the V phase, and one end of the electrical series connection between the three power source units 51 to 53 of the W phase are electrically connected through a three-phase connection 9. The other end of the electrical series connection between the three power source units 31 to 33 of the U phase, other end of the electrical series connection between the three power source units 41 to 43 of the V phase, and other end of the electrical series connection between the three power source units 51 to 53 of the W phase are respectively electrically connected to secondary windings of corresponding phases of the three-phase transformer 2.

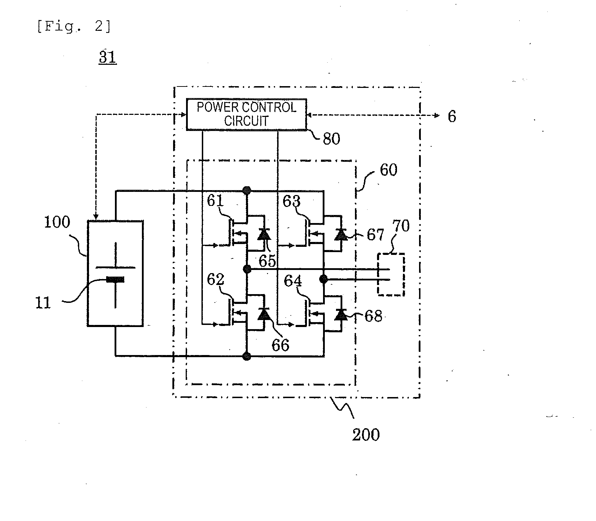

The specific configuration of the power source units 31 to 33, 41 to 43, and 51 to 53 will be described later with reference to Fig. 2.

(Functional Configuration of Central Control Device)

The central control device 6 is an electronic circuit device that controls an operation of each of the power source units 31 to 33, 41 to 43, and 51 to 53 such that power is transmitted and received between the power system 10 and the power source device 1 which are interconnected with each other. The central control device is provided with an arithmetic processing device (microcomputer) or a storage device as a main constituent. The arithmetic processing device or the storage device is mounted on a circuit substrate together with a plurality of other electronic components and is incorporated in a control panel.

Information (information relating to the three-phase AC voltage of the power system 10) relating to a three-phase AC voltage which is generated between the electricity storage system and the three-phase transformer 2 and information relating to a three-phase AC current that flows between the electricity storage system and the three-phase transformer 2 are input to the central control device 6 through an interface circuit as input information pieces.

The central control device 6 operates in accordance with a program stored in the storage device; calculates a control command for controlling the operation of each of the power source units 31 to 33, 41 to 43, and 51 to 53 based on a plurality of information pieces including the input information input through the interface circuit and storage information stored in the storage device; and transmits a signal relating to the control command to each of the power source units 31 to 33, 41 to 43, and 51 to 53 through wireless communication or cable communication.

Each of the power source units 31 to 33 generates a rectangular wave-like voltage for generating a U phase AC voltage based on the control command of which the signal is transmitted from the central control device 6. Each of the power source units 41 to 43 generates a rectangular wave-like voltage for generating a V phase AC voltage based on the control command of which the signal is transmitted from the central control device 6. Each of the power source units 51 to 53 generates a rectangular wave-like voltage for generating a W phase AC voltage based on the control command of which the signal is transmitted from the central control device 6.

The control command of which the signal is transmitted to each of the power source units 31 to 33, 41 to 43, and 51 to 53 is a command that indicates a target AC voltage to be generated in each of the power source strings 3 to 5, and is a command that indicates a pattern generation voltage for each of the power source units 31 to 33, 41 to 43, and 51 to 53 to determine a rectangular wave-like voltage pattern to be generated with respect to the corresponding target voltage.

The command indicating the target voltage is generally called a modulated wave (fundamental wave). As the modulated wave, a sine wave is used when generating an AC voltage from a DC voltage. The command indicating the pattern generation voltage is generally called a carrier wave (carrier). As the carrier wave, a triangular wave or a sawtooth wave, of which the frequency is higher than that of the modulated wave, is used. Moreover, the carrier wave is compared with the modulated wave in order to generate a rectangular wave-like voltage for generating a target AC voltage.

In this example, in each of the power source strings 3 to 5, the rectangular wave-like voltage for generating the target AC voltage is generated by being shared by the plurality of corresponding power source units. For this reason, the carrier wave of which the signal is transmitted to the power source units 31 to 33 of the power source string 3 becomes the triangular wave of which the potential level is different from that of the carrier wave. The signal of the triangular wave of which the potential level is different from that of the carrier wave is also transmitted to each of the power source units 41 to 43 of the power source string 4 and to each of the power source units 51 to 53 of the power source string 5.

The carrier wave may be generated in each of the power source units 31 to 33, 41 to 43, and 51 to 53. In this case, the signal of information required for generating the carrier wave is set to be transmitted from the central control device 6. For example, in each of the power source units 31 to 33, 41 to 43, and 51 to 53, the signal of information relating to the potential level of the carrier wave, and the signal of information relating to the height of an amplitude of the carrier wave are set to be transmitted to the power source units 31 to 33, 41 to 43, and 51 to 53.

(Configuration of Measurement Device)

Information relating to an AC voltage and an AC current which are transmitted and received between the power source strings 3 to 5 and the secondary winding (on a low voltage side) of the three-phase transformer 2 is required in order to generate a control command for operating each of the power source units 31 to 33, 41 to 43, and 51 to 53. For this reason, the current measurement device 7 and the voltage measurement device 8 are provided in the electricity storage system in order to acquire the information relating to the AC voltage and the AC current which are transmitted and received between the power source strings 3 to 5 and the secondary winding of the three-phase transformer 2.

The current measurement device 7 is provided with a current sensor portion which is provided between each of the power source strings 3 to 5 and the secondary winding of the three-phase transformer 2 and outputs a signal corresponding to the AC current which is transmitted and received between each of the power source strings and the secondary winding of the three-phase transformer; and a detection portion which detects the AC current by performing signal processing of the signal which is output from the current sensor and outputs a signal relating to a measured value to the central control device 6 as a measurement signal by setting the detected AC current as the measured value.

The voltage measurement device 8 is provided with a voltage sensor portion which is provided between each of the power source strings 3 to 5 and the secondary winding of the three-phase transformer 2 and outputs a signal corresponding to the AC voltage which is transmitted and received between each of the power source strings and the secondary winding of the three-phase transformer; and a detection portion which detects the AC voltage by performing signal processing of the signal which is output from the voltage sensor and outputs a signal relating to a measured value to the central control device 6 as a measurement signal by setting the detected AC voltage as the measured value.

The current measurement device 7 and the voltage measurement device 8 can be configured to have only the sensor portion. In this case, the central control device 6 which receives the signal from the sensor portion detects the three-phase AC current and the three-phase AC voltage by providing the detection portion on the central control device 6 side. With such a configuration, it is possible to make the configuration of the current measurement device 7 and the voltage measurement device 8 simple and it is effective in reducing the production cost.

In this example, a case of measuring the three-phase AC current and the three-phase AC voltage by installing the current measurement device 7 and the voltage measurement device 8 on the secondary side of the three-phase transformer 2 will be described as an example. However, the three-phase AC current and the three-phase AC voltage may be measured by installing the current measurement device 7 and the voltage measurement device 8 on the primary side of the three-phase transformer 2.

In the case of measuring the three-phase AC voltage and the three-phase AC current on the secondary side of the three-phase transformer 2, it is possible to further reduce withstand voltage or electric insulation of the current measurement device 7 and the voltage measurement device 8 and to further reduce the production cost of the current measurement device 7 and the voltage measurement device 8, compared to the case of measuring the three-phase AC voltage and the three-phase AC current on the primary side of the three-phase transformer 2.

(Operation Principle of Power Source Strings)

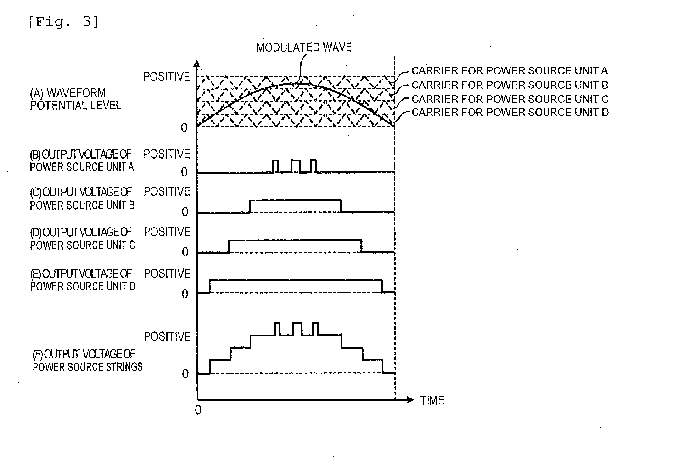

Next, an operation principle of a power source string will be described with reference to Fig. 3 while referring to the configuration in Fig. 2.

Here, an operation principle when one power source string S is constituted, that is, a method of generating one AC voltage, through electrical series connection between power source units A to D which have the same configuration as that of the power source unit 31 shown in Fig. 2 will be described.

Fig. 3 shows a time change (half (1/2) cycle) of a corresponding relations between a control command for generating a rectangular wave-like output voltage pattern generated in each of the power source units A to D, the rectangular wave-like output voltage generated in each of the power source units A to D, and an AC voltage for one phase which is generated by synthesizing the rectangular wave-like output voltages of the power source units A to D. A modulated wave (sine wave), which indicates a target AC voltage with respect to the power source string S and a carrier (carrier wave as a triangular wave), which corresponds to each of the power source units A to D constituting the power source string S, are shown as the control command.

The horizontal axis in Fig. 3 indicates a time.

The longitudinal axis in Fig. 3 indicates a potential level and an output voltage of a waveform of the modulated wave and the carrier wave which are the control command. Specifically, Fig. 3(A) shows the modulated wave with respect to the power source string S (power source units A to D) and a potential level of the carrier corresponding to each of the power source units A to D. In the drawing, the modulated wave is represented by a solid line and the carrier is represented by a broken line. Figs. 3(B) to 3(E) show rectangular wave-like output voltages of the power source units A to D. Fig. 3(F) shows an output voltage of the power source string S.

As shown in Figs. 3(B) to 3(E), the power source string S generates rectangular wave-like output voltages by sharing the output voltages between the power source units A to D. The power source units A to D are electrically connected to each other in series, and therefore, the rectangular wave-like output voltages are synthesized as shown in Fig. 3(F) and output from the power source string S as AC voltages of the sine wave which is close to the modulated wave (sine wave) indicating the target AC voltage.

In the case of generating the rectangular wave-like output voltages in the power source units A to D, a voltage generation pattern is generated so as to output the voltage when the modulated wave is greater than the carrier, by comparing the sine wave-like modulated wave, which indicates the target AC voltage, with the corresponding triangular wave-like carrier (carrier wave) in a power control circuit 80 (to be described later with reference to Fig. 2) of each of the power source units A to D as shown in Fig. 3(a). Here, the potential levels of the carrier with respect to the respective power source units A to D are different from each other as shown in Fig. 3(A). Therefore, the power source units A to D can generate rectangular wave-like voltages with different pulse widths as shown in Figs. 3(B) to 3(E).

The power control circuit 80 of each of the power source units A to D calculates information relating to a rectangular wave-like voltage generation pattern generated in a corresponding power source unit based on the comparison between the modulated wave and the carrier; calculates information relating to a switching drive pattern of each of switching elements 61 to 64 (to be described later with reference to Fig. 2) constituting a switching circuit 60 of the corresponding power source unit based on the information relating to the calculated voltage generation pattern; generates a notch wave for input to each gate of the switching elements 61 to 64 constituting the switching circuit 60 of the corresponding power source unit based on the information relating to the calculated switching drive pattern; and outputs the generated notch wave to each gate of the switching elements 61 to 64 constituting the switching circuit 60 of the corresponding power source unit. Accordingly, the switching elements 61 to 64 constituting each switching circuit 60 of the power source units A to D are subjected to a switching operation (turned on/off), and rectangular wave-like voltages (refer to Figs. 3(B) to 3(E)) corresponding to the rectangular wave-like voltage generation patterns in the power source units A to D.

The power source string S is electrically connected to the output side (AC side) of the power source units A to D in series, as will be described later. For this reason, the rectangular wave-like voltages with different pulse width which have generated in and output from the power source units A to D are synthesized (added) and output. The shape of the synthetic voltage becomes a stepped waveform in which the rectangular wave-like voltages in Figs. 3(B) to 3(E) are stacked in order from Fig. 3(E), as shown in Fig. 3(F). When the edge of the waveform is microscopically observed, it becomes a sine waveform approximate to the target AC voltage (modulated wave) shown in Fig. 3(A). As a result, the power source string S can output an AC voltage which changes at an amplitude and in a cycle which are approximate to the target AC voltage (modulated wave) shown in Fig. 3(A).

As described above, in Fig. 3, the operation principle when the one power source string is constituted of the four power source units and the output voltage of the power source string is generated by being shared by the four power source units has been described. However, the output voltage using the plurality of power source units may be shared by a plurality of power source strings. In addition, it is possible to output the AC voltage more approximate to the target AC voltage as the number of power source units sharing the voltage becomes greater.

(Configuration of Power Source Unit)

Next, the configuration of the power source unit will be described.

All of the power source units 31 to 33, 41 to 43, and 51 to 53 shown in Fig. 1 have the same configuration. Therefore, hereinafter, the configuration of the power source unit 31 will be representatively exemplified and described with reference to Fig. 2, and the description of the configurations of other power source units 32, 33, 41 to 43, and 51 to 53 will not be repeated.

As shown in Fig. 2, the power source unit 31 is provided with an electricity storage unit (or battery unit) 100 and a power conversion unit 200 as main constituents. The power source unit generates a rectangular wave-like voltage for generating an AC voltage based on an on/off signal (notch wave) which is obtained by comparing the modulated wave and the carrier wave.

The electricity storage unit 100 and the power conversion unit 200 are electrically connected to each other by a positive electrode side of the electricity storage unit 100 and a DC positive electrode side of the power conversion unit 200 being electrically connected to each other through a DC positive electrode side-conductive path and by a negative electrode side of the electricity storage unit 100 and DC negative electrode side of the power conversion unit 200 being electrically connected to each other through a DC negative electrode side-conductive path.

(General Description of Electricity Storage Unit)

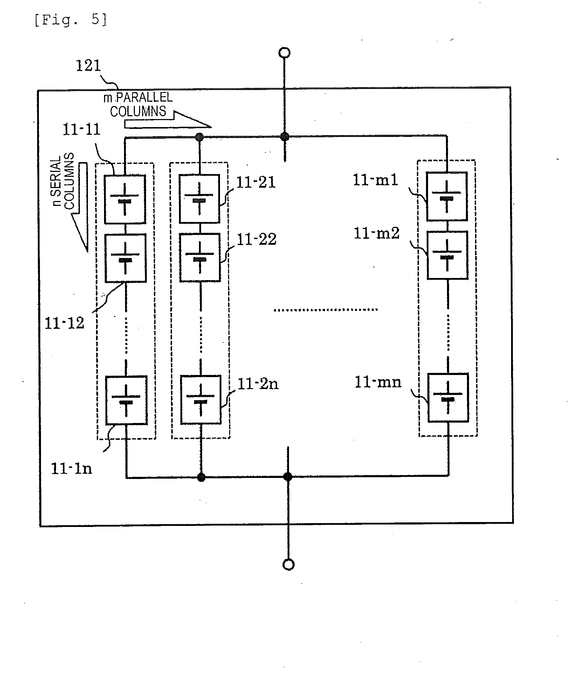

The electricity storage unit 100 is provided with a plurality of power storage devices 11 as main constituents and charges and discharges DC power. As the power storage device 11, a lithium-ion secondary battery which is a storage battery is used as described above. The plurality of power storage devices 11 are electrically connected to each other in series and parallel as will be described later with reference to Fig. 5.

The number of power storage devices 11 constituting the electricity storage unit 100 or how to electrically connect the plurality of power storage devices to each other may be appropriately set in accordance with the rated output voltage or the rated storage capacity which is required for the power source device 1.

(Configuration of Power Conversion Unit)

The power conversion unit 200 is provided with the switching circuit 60, the power control circuit 80 which controls the operation of the switching circuit 60, and a load side connection end 70, as main constituents. When discharging DC power from the electricity storage unit 100, one rectangular wave-like voltage for generating an AC voltage is generated and output from a DC voltage output from the electricity storage unit 100. When charging the electricity storage unit 100 with DC power, the DC voltage is generated from the input AC voltage and is output to the electricity storage unit 100.

(Configuration of Switching Circuit)

The switching circuit 60 is provided with semiconductor switching elements 61 to 64 and constitutes a single phase full bridge inverter circuit, which is one of power conversion circuits, through electric bridge connection between the switching elements 61 to 64. An Nch-type field-effect transistor (MOSFET (metal-oxide-semiconductor field-effect transistor)) is used in the switching elements 61 to 64. As the switching elements 61 to 64, other switching elements such as an insulated gate-type bipolar transistor (IGBT (insulated gate bipolar transistor)) may be used.

Specifically, the single phase full bridge inverter circuit is constituted by electrically connecting a first arm, which is constituted through electrical series connection between a source of a switching element 61 of an upper arm and a drain of a switching element 62 of a lower arm, to a second arm, which is constituted through electrical series connection between a source of a switching element 63 of an upper arm and a drain of a switching element 64 of a lower arm in parallel, by electrically connecting the drains of the switching elements 61 and 63 of the upper arms to the sources of the switching elements 62 and 64 of the lower arms.

A diode is electrically connected between each drain and each source of the switching elements 61 to 64 such that the direction of the current is in a forward direction from the source to the drain. Specifically, a diode 65 is electrically connected between the drain and the source of the switching element 61, a diode 66 is electrically connected between the drain and the source of the switching element 62, a diode 67 is electrically connected between the drain and the source of the switching element 63, and a diode 68 is electrically connected between the drain and the source of the switching element 64. The diodes 65 to 68 are not independently prepared to be electrically connected to each other, and are parasitic between the drain and the source due to the structure of the field-effect transistor. In the case of using insulated gate bipolar transistors as the switching elements 61 to 64, it is necessary to electrically connect the diode, which is individually prepared, between the drain and the source.

The drains of the switching elements 61 and 63 of the upper arms are electrically connected to a positive electrode side terminal of the electricity storage unit 100 as a DC positive electrode side connection end, and the sources of the switching elements 62 and 64 of the lower arms are electrically connected to a negative electrode side terminal of the electricity storage unit 100 as a DC negative electrode side connection end.

The middle point of the first arm, that is, the electrical connection point between the source of the switching element 61 of the upper arm and the drain of the switching element 62 of the lower arm is drawn to the outside from the switching circuit 60 as one AC side (load side) connection end and is electrically connected to one AC side (load side) connection end 70. The middle point of the second arm, that is, the electrical connection point between the source of the switching element 63 of the upper arm and the drain of the switching element 64 of the lower arm is drawn to the outside from the switching circuit 60 as the other AC side connection end and is electrically connected to the other AC side connection terminal 70.

(Functional Configuration of Power Control Circuit)

The power control circuit 80 is an electronic circuit device that controls driving of each of the switching elements 61 to 64 so as to generate a rectangular wave-like voltage corresponding to a control command of which the signal is transmitted from the central control device 6, between the AC side connection terminals 70. The power control circuit is provided with an arithmetic processing device (microcomputer) or a storage device as a main constituent. The arithmetic processing device or the storage device is mounted on a circuit substrate together with a plurality of other electronic components and is accommodated in an electronic circuit accommodation box which is provided in the power source unit 31.

Control commands (modulated wave and carrier wave), of which the signals are transmitted from the central control device 6 in wired manner or wirelessly, are input to the power control circuit 80 through the interface circuit as input information pieces.

The power control circuit 80 operates in accordance with a program stored in the storage device; calculates information relating to a rectangular wave-like voltage generation pattern based on a plurality of information pieces including input information and storage information which is stored in the storage device; calculates information relating to a driving pattern for subjecting the switching elements 61 to 64 to a switching operation (turning on/off) based on the information relating to the calculated voltage generation pattern; generates a notch wave for input to each gate of the switching elements 61 to 64 based on the information relating to the calculated switching drive pattern; and outputs the generated notch wave to each gate of the switching elements 61 to 64. Accordingly, the switching elements 61 to 64 are subjected to the switching operation (turned on/off). As a result, the switching circuit 60 generates a rectangular wave-like voltage corresponding to the rectangular wave-like voltage generation pattern.

The notch wave is a rectangular wave-like pulse signal, and in some cases, is also called a driving signal or a gate signal.

(Electrical connection Configuration on AC Side of Power Source Unit)

Next, the electrical connection relation on an AC side of the power source unit in each of the power source strings 3 to 5 in Fig. 1 will be described. The electrical connection relation on the AC side of the power source unit in each of the power source strings 3 to 5 becomes the following relationship through the configuration of the power source unit 31 described with reference to Fig. 2.

Power source string 3

Power source unit 31

One connection destination of AC side connection terminal - secondary winding of U of three-phase transformer 2

The other connection destination of AC side connection terminal - one AC side connection terminal of power source unit 32

Power source unit 32

One connection destination of AC side connection terminal - the other AC side connection terminal of power source unit 31

The other connection destination of AC side connection terminal - one AC side connection terminal of power source unit 33

Power source unit 33

One connection destination of AC side connection terminal - the other AC side connection terminal of power source unit 32

The other connection destination of AC side connection terminal - three-phase connection 9

Power source string 4

Power source unit 41

One connection destination of AC side connection terminal - secondary winding of V of three-phase transformer 2

The other connection destination of AC side connection terminal - one AC side connection terminal of power source unit 42

Power source unit 42

One connection destination of AC side connection terminal - the other AC side connection terminal of power source unit 41

The other connection destination of AC side connection terminal - one AC side connection terminal of power source unit 43

Power source unit 43

One connection destination of AC side connection terminal - the other AC side connection terminal of power source unit 42

The other connection destination of AC side connection terminal - three-phase connection 9

Power source string 5

Power source unit 51

One connection destination of AC side connection terminal - secondary winding of W of three-phase transformer 2

The other connection destination of AC side connection terminal - one AC side connection terminal of power source unit 52

Power source unit 52

One connection destination of AC side connection terminal - the other AC side connection terminal of power source unit 51

The other connection destination of AC side connection terminal - one AC side connection terminal of power source unit 53

Power source unit 53

One connection destination of AC side connection terminal - the other AC side connection terminal of power source unit 52

The other connection destination of AC side connection terminal - three-phase connection 9

According to the relationship described above, all of the power source strings 3 to 5 are electrically connected to the AC sides of corresponding power source units in series and are electrically connected between the secondary winding of a corresponding phase of the three-phase transformer 2 and the three-phase connection 9 in series.

(Detailed Configuration of Electricity Storage Unit)

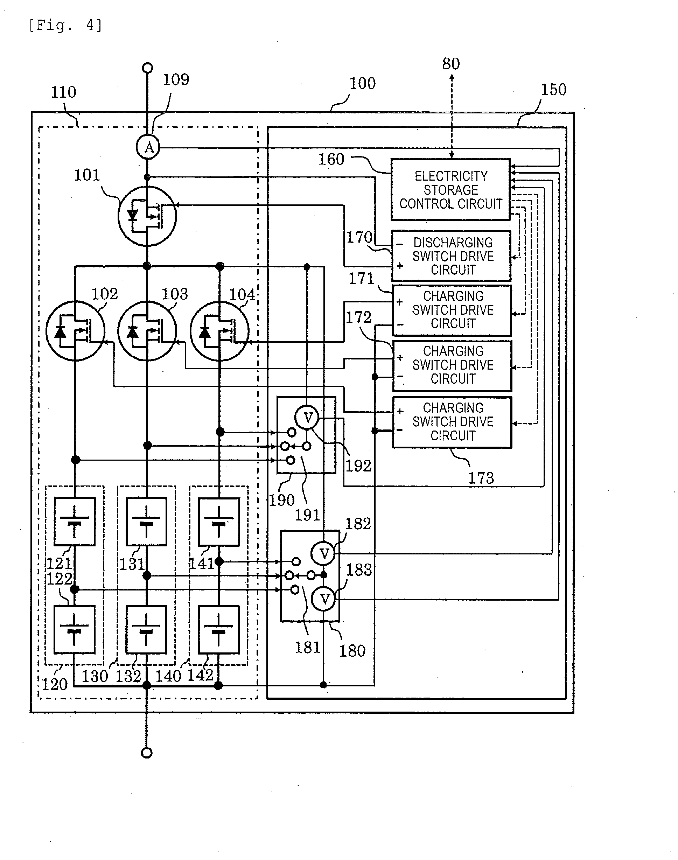

Next, the configuration of the electricity storage unit 100 will be described with reference to Figs. 4 to 6.
As described in Fig. 4, the electricity storage unit 100 is provided with an electricity storage pack (or battery pack) 110 and an electricity storage control device (or battery control device) 150 as main constituents. DC power is discharged in order to generate one rectangular wave-like voltage for generating an AC voltage and is supplied to a power conversion unit 200. The electricity storage unit 100 receives the supply of the DC power from the power conversion unit 200 to be charged with power.

(Configuration of Electricity Storage Pack)

The electricity storage pack 110 is provided with electricity storage modules (battery modules) 120 to 140, a discharging switch 101, and charging switches 102 to 104 as main constituents, and charges and discharges DC power.
The charging switch 102 is electrically connected to a positive electrode side of the electricity storage module 120, the charging switch 103 is electrically connected to a positive electrode side of the electricity storage module 130, and the charging switch 104 is electrically connected to a positive electrode side of the electricity storage module 140. Opposite sides, of the charging switches 102 to 104, to the electricity storage modules 120 to 140 are electrically connected to each other. The discharging switch 101 is electrically connected to the opposite sides, of the charging switches 102 to 104, to the sides of the electricity storage modules 120 to 140 in series for the electrical connection therebetween. Accordingly, the electricity storage module 120 is electrically connected to the DC positive electrode side of the power conversion unit 200 through the charging switch 102 and the discharging switch 101, the electricity storage module 130 is electrically connected to the DC positive electrode side of the power conversion unit through the charging switch 103 and the discharging switch 101, and the electricity storage module 140 is electrically connected to the DC positive electrode side of the power conversion unit through the charging switch 104 and the discharging switch 101.
Negative electrode sides of the electricity storage modules 120 to 140 are electrically connected to each other and are electrically connected to the DC negative electrode side of the power conversion unit 200 not through any switch for controlling a current.
A current measurement device 109 for measuring a current (charge/discharge current of the electricity storage pack 110) which is transmitted and received between the power conversion unit 200 and the electricity storage pack 110 is provided on the opposite side of the discharging switch 101 to the charging switches 102 to 104. A current transformer is used in the current measurement device 109. Other devices such as a shunt resistor (distributor) may be used as the current measurement device 109.
The electricity storage modules 120 to 140 are respectively constituted through electrical series connection between a plurality of electricity storage blocks (or battery blocks). Specifically, the electricity storage module 120 is provided with electricity storage blocks 121 and 122 and is constituted through electrical series connection between the electricity storage blocks 121 and 122. The electricity storage module 130 is provided with electricity storage blocks 131 and 132 and is constituted through electrical series connection between the electricity storage blocks 131 and 132. The electricity storage module 140 is provided with electricity storage blocks 141 and 142 and is constituted through electrical series connection between the electricity storage blocks 141 and 142.
The detailed configuration of the electricity storage blocks will be described later with reference to Fig. 5.
The discharging switch 101 and the charging switches 102 to 104 are respectively constituted of semiconductor switching elements. An Nch-type field-effect transistor is used as the semiconductor switching element.
In the field effect transistor which is commonly provided in the electricity storage modules 120 to 140 as the discharging switch 101, a source is electrically connected to the DC positive electrode side of the power conversion unit 200 and a drain is electrically connected to each of the charging switches 102 to 104 so as to control the current (discharge current) flowing to the power conversion unit 200 from the electricity storage modules 120 to 140, that is, to make the forward directions of parasitic diodes be in directions facing the electricity storage modules 120 to 140 from the power conversion unit 200.
In the field effect transistor which is exclusively provided in the electricity storage module 120 only as the charging switch 102, a source is electrically connected to the positive electrode side of the electricity storage module 120 and a drain is electrically connected to the discharging switch 101 so as to control the current (charge current) flowing to the electricity storage module 120 from the power conversion unit 200, that is, to make the forward directions of parasitic diodes be in directions facing the discharging switch 101 from the electricity storage module 120. In the field effect transistor which is exclusively provided in the electricity storage module 130 only as the charging switch 103, a source is electrically connected to the positive electrode side of the electricity storage module 130 and a drain is electrically connected to the discharging switch 101 so as to control the current (charge current) flowing to the electricity storage module 130 from the power conversion unit 200, that is, to make the forward directions of parasitic diodes be in directions facing the discharging switch 101 from the electricity storage module 130. In the field effect transistor which is exclusively provided in the electricity storage module 140 only as the charging switch 104, a source is electrically connected to the positive electrode side of the electricity storage module 140 and a drain is electrically connected to the discharging switch 101 so as to control the current (charge current) flowing to the electricity storage module 140 from the power conversion unit 200, that is, to make the forward directions of parasitic diodes be in directions facing the discharging switch 101 from the electricity storage module 140.

Here, the discharging switch 101 and the charging switches 102 to 104 have a so-called relationship of reverse connection in which the drain of the field effect transistor, which is provided as the discharging switch 101, and the drains of the field effect transistors, which are provided as the charging switches 102 to 104, are electrically connected to each other and the forward direction of the field effect transistor, which is provided as the discharging switch 101, and the forward direction of each parasitic diode of the field effect transistors, which are provided as the charging switches 102 to 104, are reversed.

The charging switches 102 to 104 are provided corresponding to a protective range (unit) of power storage devices with respect to an inrush current. The protective range is determined within a range in which the inrush current flowing to a battery group with the lowest potential can be blocked or controlled by the charging switches such that the inrush current flowing to battery group with the lowest potential does not exceed an allowable current of the power storage devices, based on the potential difference between groups of the plurality of power storage devices which are electrically connected to each other in parallel. Accordingly, the electricity storage modules 120 to 140 indicate the protective range of the power storage devices with respect to the inrush current and are a set (power storage device group) of a plurality of power storage devices which is determined from the range in which the inrush current flowing to the battery group with the lowest potential can be blocked or controlled by the charging switches such that the inrush current flowing to the lowest potential does not exceed the allowable current of the power storage devices.

The discharging switch 101 is provided corresponding to a range (unit) in which the electricity storage modules 120 to 140 which are electrically connected to each other in parallel are electrically separated from a main circuit. The separation range is determined from a range of allowing stopping charging/discharging of power storage devices when the number of power storage devices, which are electrically connected to each other, is greater than that of the electricity storage modules 120 to 140 and the power storage devices are replaced during load operation of the power source device 1. Accordingly, the electricity storage pack 110 indicates the separation range and is a set (power storage device group) of the plurality of power storage devices determined from the range of stopping of the charging/discharging.

It is unnecessary to provide the discharging switch 101 together with the charging switches 102 to 104 if the discharging switch 101 and the charging switches 102 to 104 are provided based on such an idea. Therefore, it is possible to reduce the number of discharging switches 101 and to reduce the production cost while securing reliability with respect to the inrush current.

The charging switches 102 to 104 are constituted of one field effect transistor, but may be constituted such that two or more-field effect transistors are electrically connected to each other in series when the withstand voltage is large, and that two or more field effect transistors are electrically connected to each other in parallel when the current capacity is large.

(Configuration of Electricity Storage Block)

Next, the configuration of an electricity storage block will be described.

All of the electricity storage blocks 121, 122, 131, 132, 141, and 142 shown in Fig. 4 have the same configuration. Therefore, hereinafter, the configuration of the electricity storage block 121 will be representatively exemplified and described with reference to Fig. 5, and the description of the configurations of other electricity storage blocks 122, 131, 132, 141, and 142 will not be repeated.

The electricity storage block 121 is constituted of a power storage device group in which m (m is an arbitrary positive integer of 1, 2, 3, ...) power storage device columns, in which n (n is an arbitrary positive integer of 1, 2, 3, ...) power storage devices 11 are electrically connected to each other in series, are electrically connected to each other in parallel, as shown in Fig. 5. In this example, the power storage device group is set such that four or more power storage devices 11, that is, n and m are greater than or equal to 2, are electrically connected to each other in series and parallel.

In a case where n is 1 and m is greater than or equal to 2, a power storage device group in which two or more power storage devices 11 are electrically connected to each other in parallel is constituted, and in a case where m is 1 and n is greater than or equal to 2, a power storage device group in which two or more power storage devices 11 are electrically connected to each other in series is constituted. However, the number of power storage devices 11 or the electrical connection configuration is appropriately determined in accordance with specifications such as the output voltage or the electricity storage capacity required for the power source device 1.

(Configuration of Electricity Storage Control Device)

The electricity storage control device 150 is an electronic circuit device which detects the states of the electricity storage modules 120 to 140, controls driving of the discharging switch 101 and the charging switches 102 to 104 based on the detected information, and controls charging/discharging of the electricity storage modules 120 to 140. The electricity storage control device is provided with an electricity storage control circuit 160 which includes an arithmetic processing device (microcomputer) or a storage device; a discharging switch drive circuit 170 which drives the discharging switch 101; charging switch drive circuits 171 to 173 which drive the charging switches 102 to 104; and voltage measurement circuits 180 and 190 which measure voltages of the electricity storage modules 120 to 140 or voltages between drains and sources of the charging switches 102 to 104, as main constituents. The electricity storage control circuit 160, the discharging switch drive circuit 170, the charging switch drive circuits 171 to 173, and voltage measurement circuits 180 and 190 are mounted on a circuit substrate together with a plurality of other electronic components and are accommodated in an electronic circuit accommodation box which is provided in the electricity storage unit 100.

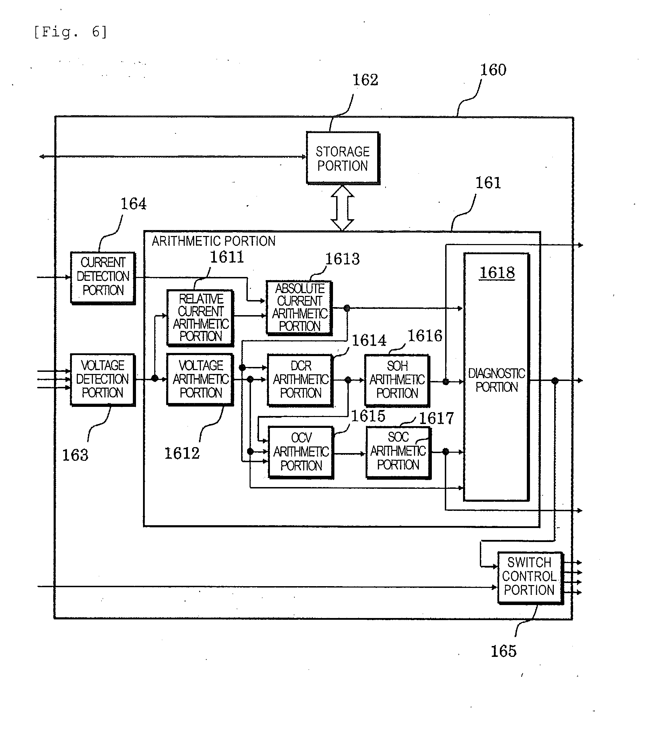

The electricity storage control circuit 160 operates in accordance with a predetermined program stored in the storage device. The functional configuration of the electricity storage control circuit 160 will be described later with reference to Fig. 6.

The discharging switch drive circuit 170 is a gate signal generating circuit which generates a driving voltage (pulse voltage) to be input to a gate of the discharging switch 101, inputs the generated driving voltage to the gate of the discharging switch 101, and switches (turns on/off) the discharging switch 101, based on a control signal output from the electricity storage control circuit 160. The driving voltage input to the gate of the discharging switch 101 is a positive voltage in which a potential on the source side of the discharging switch 101 is generated as a reference potential (ground potential).

The charging switch drive circuit 171 is a gate signal generating circuit which generates a driving voltage (pulse voltage) to be input to a gate of the charging switch 102, inputs the generated driving voltage to the gate of the charging switch 102, and switches (turns on/off) the charging switch 102, based on a control signal output from the electricity storage control circuit 160. The driving voltage input to the gate of the charging switch 102 is a positive voltage in which a potential on the opposite side of the electricity storage module 120 to the charging switch 102 is generated as a reference potential (ground potential).

The charging switch drive circuit 172 is a gate signal generating circuit which generates a driving voltage (pulse voltage) to be input to a gate of the charging switch 103, inputs the generated driving voltage to the gate of the charging switch 103, and switches (turns on/off) the charging switch 103, based on a control signal output from the electricity storage control circuit 160. The driving voltage input to the gate of the charging switch 103 is a positive voltage in which a potential on the opposite side of the electricity storage module 130 to the charging switch 103 is generated as a reference potential (ground potential).

The charging switch drive circuit 173 is a gate signal generating circuit which generates a driving voltage (pulse voltage) to be input to a gate of the charging switch 104, inputs the generated driving voltage to the gate of the charging switch 104, and switches (turns on/off) the charging switch 104, based on a control signal output from the electricity storage control circuit 160. The driving voltage input to the gate of the charging switch 104 is a positive voltage in which a potential on the opposite side of the electricity storage module 140 to the charging switch 104 is generated as a reference potential (ground potential).

The voltage measurement circuit 180 is provided with a selection portion 181 and voltage measurement portions 182 and 183.

The selection portion 181 is provided with a changeover switch that selects any of an electrical connection column between the electricity storage module 120 and the charging switch 102, an electrical connection column between the electricity storage module 130 and the charging switch 103, and an electrical connection column between the electricity storage module 140 and the charging switch 104. The selection portion inputs a potential (any of a potential between the electricity storage blocks 121 and 122, a potential between the electricity storage blocks 131 and 132, and a potential between the electricity storage blocks 141 and 142) between two electricity storage blocks of the selected connection column.

The voltage measurement portion 182 is provided with a resistance voltage division circuit of which one end is electrically connected to the drains of the charging switches 102 to 104 and the other end is electrically connected to one end (output end of the selection portion 181) of the voltage measurement portion 183; and an amplification circuit. The voltage measurement portion divides a potential difference (voltage) between a potential on each drain side of the charging switches 102 to 104 and a potential (any of intermediate potentials between the electricity storage blocks 121 and 122, between the electricity storage blocks 131 and 132, and between the electricity storage blocks 141 and 142) selected by the selection portion 181, using the resistance voltage division circuit; and outputs the divided voltage to the electricity storage control circuit 160 by amplifying the divided voltage using the amplification circuit.

The voltage measurement portion 183 is provided with a resistance voltage division circuit of which one end is electrically connected to the other end (output end of the selection portion 181) of the voltage measurement portion 182 and the other end is electrically connected to opposite sides of the electricity storage modules 120 to 140 to the charging switches 102 to 104, that is, to the negative electrode side; and an amplification circuit. The voltage measurement portion divides a potential difference (voltage) between a potential on the opposite sides of the electricity storage modules 120 to 140 to the charging switches 102 to 104, that is, on the negative electrode side, and a potential (any of intermediate potentials between the electricity storage blocks 121 and 122, between the electricity storage blocks 131 and 132, and between the electricity storage blocks 141 and 142) selected by the selection portion 181, using the resistance voltage division circuit; and outputs the divided voltage to the electricity storage control circuit 160 by amplifying the divided voltage using the amplification circuit.

The voltage measurement circuit 190 is provided with a selection portion 191 and a voltage measurement portion 192.

The selection portion 191 is provided with a changeover switch that selects any of an electrical connection column between the electricity storage module 120 and the charging switch 102, an electrical connection column between the electricity storage module 130 and the charging switch 103, and an electrical connection column between the electricity storage module 140 and the charging switch 104. The selection portion inputs a potential (any of a potential between the electricity storage block 121 and the charging switch 102, a potential between the electricity storage block 131 and the charging switch 103, and a potential between the electricity storage block 141 and the charging switch 104) between an electricity storage block of the selected connection column and a charging switch.

The voltage measurement portion 192 is provided with a resistance voltage division circuit of which one end is electrically connected to the drains of the charging switches 102 to 104 and the other end is electrically connected to an output end of the selection portion 191; and an amplification circuit. The voltage measurement portion divides a potential difference (voltage) between a potential on each drain side of the charging switches 102 to 104 and a potential (any of potentials between the electricity storage block 121 and the charging switch 102, a potential between the electricity storage block 131 and the charging switch 103, and a potential between the electricity storage block 141 and the charging switch 104) selected by the selection portion 181, using the resistance voltage division circuit; and outputs the divided voltage to the electricity storage control circuit 160 by amplifying the divided voltage using the amplification circuit.

The number of voltage measurement circuits which detect voltages at both ends of the electricity storage modules 120 to 140 may be set to one. In this case, the input end of the selection portion may be set to be able to input the potential between the electricity storage block 121 and the charging switch 102, the potential between the electricity storage block 131 and the charging switch 103, and the potential between the electricity storage block 141 and the charging switch 104. It is possible to reduce the production cost if the number of voltage measurement circuits is set to one.

(Functional Configuration of Electricity Storage Control Circuit)

Next, the configuration of the electricity storage control circuit 160 will be described with reference to Fig. 6.

As shown in Fig. 6, the electricity storage control circuit 160 is provided with an arithmetic portion 161, a storage portion 162, a voltage detection portion 163, a current detection portion 164, and a switch control portion 165 as main constituents. The electricity storage control circuit performs processing by inputting a plurality of signals including a command signal which is output from the power control circuit 80 or measurement signals which are output from the voltage measurement circuits 180 and 190 and the current measurement device 109; and outputs a plurality of signals including control signals with respect to the discharging switch drive circuit 170 and the charging switch drive circuits 171 to 173 or signals relating to the state estimation amount of the electricity storage modules 120 to 140 and diagnostic results.

The storage portion 162 stores a control program required for operating the arithmetic portion 161, characteristic information relating to the characteristics of power storage devices, state information of detected power storage devices, state information of power storage devices estimated by the arithmetic operation, diagnostic information, and information including a use history. It is possible to read and write the program or the information pieces between the storage portion and the arithmetic portion 161. It is possible to access the storage portion 162 from the outside, and it is possible to write the control program or the characteristic information or to read each of the stored information pieces.

The voltage detection portion 163 detects a voltage measured by voltage measurement portions 182, 183, and 192 and outputs the detected voltage to the arithmetic portion 161 based on the measurement signals output from the voltage measurement circuits 180 and 190. The voltage detection can convert the measurement signals as analog signals to digital signals using an analog/digital converter and detect the converted digital signals through signal processing.

The voltages detected by the voltage detection portion 163 are voltages, at both ends of each of the electricity storage blocks 122, 132, and 142, which are measured by the voltage measurement portion 183; voltages, at both ends of each of an electrical series connection column between the electricity storage block 121 and the charging switch 102, an electrical series connection column between the electricity storage block 131 and the charging switch 103, and an electrical series connection column between the electricity storage block 141 and the charging switch 104, which are measured by the voltage measurement portion 182; and voltages, between drains and sources of each of the charging switches 102 to 104, which are measured by the voltage measurement portion 192.

The current detection portion 164 detects a current charged and discharged between the electricity storage pack 110 and the power conversion unit 200 based on the measurement signals output from the current measurement device 109, and outputs the detected current to the arithmetic portion 161. The current detection can convert the measurement signals as analog signals to digital signals using an analog/digital converter and detect the converted digital signals through signal processing.

The switch control portion 165 generates a control signal for controlling a switching operation (turning on/off) of the discharging switch 101 and a switching operation (turning on/off) of each of the charging switches 102 to 104 and outputs the generated control signal to each of the discharging switch drive circuit 170 and the charging switch drive circuits 171 to 173, based on the command signal output from the power control circuit 80.

The command signal output from the power control circuit 80 is a starting signal for starting the charging/discharging of the electricity storage pack 110, or a pause signal for stopping the charging/discharging of the electricity storage pack 110. When the starting signal is input, the switch control portion 165 outputs a turn-on control signal of the discharging switch drive circuit 170 and each of the charging switch drive circuits 171 to 173. When the pause signal is input, the switch control portion 165 outputs a turn-off control signal of the discharging switch drive circuit 170 and each of the charging switch drive circuits 171 to 173. In addition, partial output of the arithmetic portion 161 is also input to the switch control portion 165, and therefore, it is also possible to control the switching by the output of the arithmetic portion 161.

The arithmetic portion 161 inputs voltage detection information and current detection information which are output from the voltage detection portion 163 and the current detection portion 164; calculates voltages at both ends of each of the electricity storage modules 120 to 140, charging/discharging currents, states of charge (SOC), and states of health (deterioration) (SOH); performs various diagnoses on each of the electricity storage modules 120 to 140 based on the calculation result and outputs calculated partial arithmetic information and the diagnostic results to the power control circuit 80; and further outputs the diagnostic results to the switch control portion 165.

For this reason, as shown in Fig. 6, the arithmetic portion 161 is provided with a relative current arithmetic portion 1611, a voltage arithmetic portion 1612, an absolute current arithmetic portion 1613, a DCR (DC internal resistance) arithmetic portion 1614, an OCV (open (-circuit) voltage) arithmetic portion 1615, an SOH (state of health (deterioration)) arithmetic portion 1616, an SOC (state of charge) arithmetic portion 1617, and a diagnostic portion 1618, as main constituents.

The output voltage detected by the voltage detection portion 163 is input to the relative current arithmetic portion 1611 and the voltage arithmetic portion 1612.

The output current detected by the current detection portion 164 is input to the absolute current arithmetic portion 1613.

The relative current arithmetic portion 1611 calculates relative charge/discharge currents of each of the electricity storage modules 120 to 140 based on the voltage detected by the voltage detection portion 163 and an on-resistance value (drain-source resistance) of each of the charging switches 102 to 104. The voltages detected by the voltage detection portion 163 are voltages at both ends (between a drain and a source) of each of the charging switches 102 to 104. Meanwhile, the on-resistance value of each of the charging switches 102 to 104 is stored in the storage portion 162 in advance. For this reason, the relative current flowing to each of the electricity storage modules 120 to 140 can be calculated by dividing the voltages at both ends of the charging switches 102 to 104 which are detected by the voltage detection portion 163 by an on-resistance value of a corresponding charging switch between the on-resistance values of the charging switches 102 to 104 which are stored in the storage portion 162.

The relative charge/discharge currents calculated in this manner are output from the relative current arithmetic portion 1611 and input to the absolute current arithmetic portion 1613.

The voltage arithmetic portion 1612 calculates the voltages at both ends of each of the electricity storage modules 120 to 140 based on the voltages detected by the voltage detection portion 163. The voltages detected by the voltage detection portion 163 are voltages at both ends of each of an electrical series connection column between the electricity storage block 121 and the charging switch 102, an electrical series connection column between the electricity storage block 131 and the charging switch 103, and an electrical series connection column between the electricity storage block 141 and the charging switch 104; voltages at both ends (between drains and sources) of each of the charging switches 102 to 104; and voltages at both ends of each of the electricity storage blocks 122, 132, and 142. The voltages at both ends of each of the electricity storage modules 120 to 140 can be calculated by subtracting voltages at both ends of a corresponding charging switch between the voltages at both ends of the charging switches 102 to 104, from the voltages at both ends of each of an electrical series connection column between the electricity storage block 121 and the charging switch 102, an electrical series connection column between the electricity storage block 131 and the charging switch 103, and an electrical series connection column between the electricity storage block 141 and the charging switch 104, and by adding voltages at both ends of a corresponding electricity storage block between voltages at both ends of each of the electricity storage blocks 122, 132, and 142 thereto.

When each of the charging switches 102 to 104 is turned off, the voltages at both ends of each of the electricity storage modules 120 to 140 can be calculated by only adding the voltages at both ends of the corresponding electricity storage block between the voltages at both ends of each of the electricity storage blocks 122, 132, and 142 to the voltages at both ends of each of an electrical series connection column between the electricity storage block 121 and the charging switch 102, an electrical series connection column between the electricity storage block 131 and the charging switch 103, and an electrical series connection column between the electricity storage block 141 and the charging switch 104. That is, when each of the charging switches 102 to 104 is turned off, the voltages at both ends of the charging switches 102 to 104 are substantially zero. Therefore, it can be regarded that the voltages at both ends of each of an electrical series connection column between the electricity storage block 121 and the charging switch 102, an electrical series connection column between the electricity storage block 131 and the charging switch 103, and an electrical series connection column between the electricity storage block 141 and the charging switch 104 are substantially voltages at both ends of the electricity storage blocks 121, 131, and 141.

The voltages at both ends of each of the electricity storage modules 120 to 140 which are calculated in this manner are output from the voltage arithmetic portion 1612, are input to the DCR arithmetic portion 1614 and OCV arithmetic portion 1615, and are also input to the diagnostic portion 1617.

The absolute current arithmetic portion 1613 calculates absolute charge/discharge currents of each of the electricity storage modules 120 to 140 based on the current detected by the current detection portion 164 and the relative current calculated by the relative current arithmetic portion 1611. In this manner, the absolute charge/discharge currents are calculated in order to obtain variation of the charge/discharge currents of the electricity storage modules 120 to 140, in the diagnostic portion 1618 to be described later. This is because it is necessary to convert the relative current calculated by the relative current arithmetic portion 1611 to the absolute current in order to obtain the variation of the charge/discharge currents. In addition, it is because the absolute charge/discharge currents of each of the electricity storage modules 120 to 140 are required for calculation of the DCR arithmetic portion 1614 and the OCV arithmetic portion 1615 to be described later. For this reason, in the absolute current arithmetic portion 1613, the ratio of the relative charge/discharge current of each of the electricity storage modules 120 to 140 with respect to the total value of the relative charge/discharge currents of the electricity storage modules 120 to 140 is calculated based on the relative charge/discharge current of each of the electricity storage modules 120 to 140. The calculated ratio of the relative charge/discharge current is added to an absolute charge/discharge current of the electricity storage pack 110 which is detected by the current detection portion 164 to calculate the absolute charge/discharge current of each of the electricity storage modules 120 to 140.

The absolute charge/discharge current calculated in this manner is output from the absolute current arithmetic portion 1613, is input to the DCR arithmetic portion 1614 and the OCV arithmetic portion 1615, and is also input to the diagnostic portion 1618.

The DCR arithmetic portion 1614 calculates a DC internal resistance of each of the electricity storage modules 120 to 140 based on the voltage calculated by the voltage arithmetic portion 1612 and the absolute charge/discharge current of each of the electricity storage modules 120 to 140 which is calculated by the absolute current arithmetic portion 1613. The voltage calculated by the voltage arithmetic portion 1612 is a voltage at both ends of each of the electricity storage modules 120 to 140 when turning on/off the charging switches 102 to 104. The DC internal resistance (DCR) of each of the electricity storage modules 120 to 140 can be calculated using Equation 1.

$$DCR = (V2 - V1) / I1 \ldots (Equation\ 1)$$

Here, V1 represents voltages at both ends of each of the electricity storage modules 120 to 140 when the charging switches 102 to 104 are turned on;

V2 represents voltages at both ends of each of the electricity storage modules 120 to 140 when the charging switches 102 to 104 are turned off; and

I1 represents an absolute charge/discharge current of each of the electricity storage modules 120 to 140.

The DC internal resistance calculated in this manner is output from the DCR arithmetic portion 1614 and is input to the SOH arithmetic portion 1616 and the OCV arithmetic portion 1615.

The OCV arithmetic portion 1615 calculates an open (-circuit) voltage of each of the electricity storage modules 120 to 140 based on the voltage calculated by the voltage arithmetic portion 1612, the absolute charge/discharge current calculated by the absolute current arithmetic portion 1613, and the DC internal resistance calculated by the DCR arithmetic portion 1613. The voltages calculated by the voltage arithmetic portion 1612 are voltages at both ends of each of the electricity storage modules 120 to 140 when the charging switches 102 to 104 are turned on. The open (-circuit) voltage (OCV) of each of the electricity storage modules 120 to 140 can be calculated using Equation 2.

$$OCV = V + I \cdot DCR \ldots \text{(Equation 2)}$$

Here, V represents voltages at both ends of each of the electricity storage modules 120 to 140 when the charging switches 102 to 104 are turned on;
I represents an absolute charge/discharge current of each of the electricity storage modules 120 to 140; and
DCR represents a DC internal resistance of each of the electricity storage modules 120 to 140.

The open (-circuit) voltage calculated in this manner is output from the OCV arithmetic portion 1615 and input to the SOC arithmetic portion 1617.

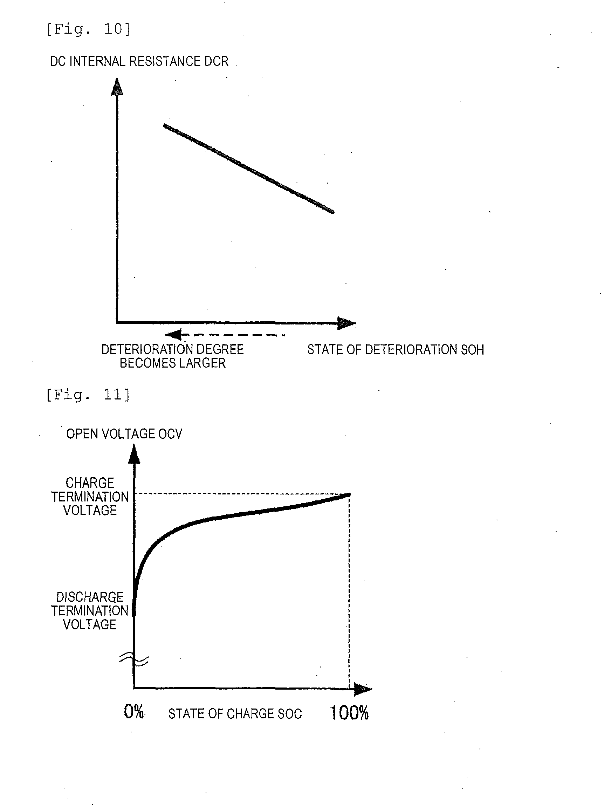

The SOH arithmetic portion 1614 calculates the state of health (deterioration) of each of the electricity storage modules 120 to 140 based on the information stored in the storage portion 162 and the DC internal resistance calculated by the DCR arithmetic portion 1613. The information stored in the storage portion 162 is characteristic information showing a relationship between the state of health (deterioration) and the DC internal resistance. The state of health (deterioration) is a value in which the size of a current electricity storage capacity is represented by the percentage based on the electricity storage capacity at the time of a new product state and has a correlation with the DC internal resistance (refer to Fig. 10). That is, as shown in Fig. 10, there is a linear correlation in that the state of health (deterioration) is more favorable (less deterioration) as the DC internal resistance becomes smaller, and the state of health (deterioration) is more deteriorated (large deterioration) as the DC internal resistance becomes larger. The relationship (refer to Fig. 10) between the DC internal resistance and the state of health (deterioration) is mapped (tabulated) and stored in the storage portion 162 in advance. The state of health (deterioration) of each of the electricity storage modules 120 to 140 can be calculated by referring to the map (table) showing the relationship between the DC internal resistance and the state of health (deterioration) based on the DC internal resistance of each of the electricity storage modules 120 to 140.

The state of health (deterioration) calculated in this manner is output from the SOH arithmetic portion 1616, is input to the diagnostic portion 1618, and is also input to the power control circuit 80 as one state information piece of the electricity storage pack 110.

The change of the solid line, for example, the inclination, shown in Fig. 10 varies depending on the type of a secondary battery used as the power storage device, the material used for an electrode, or the like.

The SOC arithmetic portion 1616 calculates the state of charge of each of the electricity storage modules 120 to 140 based on the information stored in the storage portion 162 and the open (-circuit) voltage calculated by the OCV arithmetic portion 1615. The information stored in the storage portion 162 is characteristic information showing a relationship between the state of charge and the open (-circuit) voltage. The state of charge is a value in which the charge amount (integrated current value over time) that can be currently discharged is represented by the percentage and has a correlation with the open (-circuit) voltage (refer to Fig. 11). That is, as shown in Fig. 11, there is a curved correlation in that the voltage becomes a discharge termination voltage when the state of charge is 0%; the voltage becomes a charge termination voltage when the state of charge is 100%; the voltage greatly increases within a range of the state of charge from 0% to about 10%; the increase of the voltage is small from the state of charge of about 10%; and the voltage increases at an almost constant rate of change from the state of charge of about 20%. The relationship (refer to Fig. 11) between the open (-circuit) voltage and the state of charge is mapped (tabulated) and stored in the storage portion 162 in advance. The state of charge of each of the electricity storage modules 120 to 140 can be calculated by referring to the map (table) showing the relationship between the open (-circuit) voltage and the state of charge based on the open (-circuit) voltage of each of the electricity storage modules 120 to 140.

The state of charge calculated in this manner is output from the SOC arithmetic portion 1617, is input to the diagnostic portion 1618, and is also input to the power control circuit 80 as one state information piece of the electricity storage pack 110.

The change of the curved line, for example, the inclination, shown in Fig. 11 varies depending on the type of a secondary battery used as the power storage device, the material used for an electrode, or the like.

In addition, the relationship shown in Fig. 11 readily changes under the influence of temperature. For this reason, the relationship, including the temperature, shown in Fig. 11 may be three-dimensionally mapped (tabulated) with three parameters such as the open (-circuit) voltage, the state of charge, and the temperature, and the three-dimensional map (table) may be referred to based on the detection information of the temperature and the arithmetic information of the open (-circuit) voltage, so as to calculate the state of charge of each electricity storage module. In this manner, it is possible to accurately estimate the state of charge of each electricity storage module.

The diagnostic portion 1618 performs diagnosis based on the absolute charge/discharge current calculated by the absolute current arithmetic portion 1613, the voltage calculated by the voltage arithmetic portion 1612, the state of health (deterioration) calculated by the SOH arithmetic portion 1616, and the state of charge calculated by the SOC arithmetic portion 1617.

The absolute charge/discharge current calculated by the absolute current arithmetic portion 1613 is an absolute charge/discharge current of each of the electricity storage modules 120 to 140. The voltages calculated by the voltage arithmetic portion 1612 are voltages at both ends of each of the electricity storage modules 120 to 140 when the charging switches 102 to 104 are turned on and off. The state of health (deterioration) calculated by the SOH arithmetic portion 1616 is a state of health (deterioration) of each of the electricity storage modules 120 to 140. The state of charge calculated by the SOC arithmetic portion 1617 is a state of charge of each of the electricity storage modules 120 to 140.

As the diagnosis using the diagnostic portion 1618, deterioration diagnosis with respect to each of the electricity storage modules 120 to 140, fault diagnosis with respect to each of the electricity storage modules 120 to 140, diagnosis of voltage variation between the electricity storage modules 120 to 140, and diagnosis of current variation between the electricity storage modules 120 to 140 are performed.

The deterioration diagnosis is a diagnostic logic that examines whether there is a defective power storage device with large deterioration degree in each of the electricity storage modules 120 to 140 based on the state of health (deterioration) of each of the electricity storage modules 120 to 140. The logic of the deterioration diagnosis is programmed such that the state of health (deterioration) of each of the electricity storage modules 120 to 140 and the threshold value of the state of health (deterioration) which is previously set are compared with each other, and when the state of health (deterioration) is less than or equal to a predetermined threshold value of the state of health (deterioration), it is determined that there is a defective power storage device with large deterioration degree in any of the electricity storage modules 120 to 140.

The fault diagnosis is a diagnostic logic that examines whether there is a defective power storage device with a large self-discharge amount in any of the electricity storage modules 120 to 140 based on the state of charge of each of the electricity storage modules 120 to 140. The logic of the fault diagnosis is programmed such that the state of charge of each of the electricity storage modules 120 to 140 when the charging switches 102 to 104 are simultaneously turned off is acquired plural times at constant time intervals; the amount of change (drop) of the state of charge of the electricity storage modules 120 to 140 in relation to the change in time are calculated; an average value of the amount of change (drop) of the state of charge of all of the electricity storage modules 120 to 140 is calculated from the calculated amount of change; the calculated average value of the amount of change (drop) and the amount of change (drop) of the state of charge of each of the electricity storage modules 120 to 140 are compared with each other; and when the difference therebetween is greater than or equal to a predetermined threshold value of the change amount of the state of charge which is previously set, it is determined that there is a defective power storage device with large self-discharge amount in any of the electricity storage modules 120 to 140.

When a separator constituting the electrode of the power storage device deteriorates, or when insulation between positive and negative electrodes deteriorates due to lithium ions in an electrolytic solution being deposited in the separator in a dendritic shape, or the like, a minute short circuit occurs in the electrode of the power storage device, and the self discharge of the power storage device becomes large. Decrease in the state of charge due to the self discharge in a normal power storage device is extremely small being, for example, about 5% per one month. However, when the minute short circuit occurs, the decrease in the state of charge due to the self discharge in the power storage device becomes greater. Accordingly, it is possible to detect the power storage device in which the self-discharge amount has became great due to the occurrence of the minute short circuit, by monitoring the amount of change (drop) of the state of charge of the power storage device.

As described above, the state of charge of the power storage device and the open (-circuit) voltage have a relationship shown in Fig. 11. Therefore, during fault diagnosis, the amount of change (drop) of the open (-circuit) voltage of the power storage device may be monitored.

In addition, it is also considered that the self-discharge amount of the power storage device is estimated from the amount of change (drop) of the state of charge of each of the electricity storage modules 120 to 140 when the charging switches 102 to 104 are turned off (in a state where charging and discharging are stopped), during the fault diagnosis. However, it is necessary to wait until there is no influence of polarization and the time required for diagnosis becomes longer. For this reason, in this example, the time required for diagnosis is reduced by relatively comparing the states of charge of the electricity storage modules 120 to 140 by considering the elapsed time from the stopping of the charging/discharging in a state where the charging switches 102 to 104 are simultaneously turned off, as the same time.

The diagnosis of voltage variation is a diagnosis logic that examines whether the voltage variation between the electricity storage modules 120 to 140 is within a predetermined range, based on voltages at both ends of each of the electricity storage modules 120 to 140 when the charging switches 102 to 104 are turned off, that is, during no load. The logic of the diagnosis of voltage variation is programmed such that a maximum voltage and a minimum voltage are selected from the voltages at both ends of each of the electricity storage modules 120 to 140 when the charging switches 102 to 140 are turned off (during no load) and the difference therebetween is calculated; the calculated difference in the voltage between both the ends thereof and a predetermined variation voltage threshold value which is previously set are compared with each other in accordance with the allowable current of the power storage device; and when the difference in the voltage between both the ends thereof is greater than or equal to the predetermined variation voltage threshold value which is previously set, that is, when the inrush current flowing to an electricity storage module with a lowest potential exceeds the allowable current of the power storage device based on the potential difference between the electricity storage modules 120 to 140, the voltage variation between the electricity storage modules 120 to 140 has deviated from a predetermined range, and therefore, it is determined that it is necessary to block or control the inrush current flowing to the electricity storage module with a lowest potential using a charging switch corresponding to the electricity storage module with a lowest potential.

The diagnosis of current variation is a diagnosis logic that examines whether the variation in absolute charge/discharge currents between the electricity storage modules 120 to 140 is within a predetermined range based on the absolute charge/discharge currents of the electricity storage modules 120 to 140. The logic of the diagnosis of current variation is programmed such that the difference between a maximum value and a minimum value of the absolute charge/discharge currents between the electricity storage modules 120 to 140 is calculated; the calculated absolute charge/discharge current difference and a predetermined absolute charge/discharge current threshold value which is previously set are compared with electronic circuit device; and when the absolute charge/discharge current difference is greater than or equal to the absolute charge/discharge current threshold value, the variation in the absolute charge/discharge currents between the electricity storage modules 120 to 140 has deviated from a predetermined range, and therefore, it is determined that it is necessary to restrict the absolute charge/discharge current of an electricity storage module of which the difference from the minimum value of the absolute charge/discharge current as a reference is greater than or equal to the absolute charge/discharge current threshold value using a charging switch corresponding to the electricity storage module of which the difference from the minimum value of the absolute charge/discharge current as a reference is greater than or equal to the absolute charge/discharge current threshold value.

The results of the deterioration diagnosis, the fault diagnosis, the diagnosis of voltage variation, and the diagnosis of current variation are output from the diagnostic portion 1618, are input to the power control circuit 80, and also input to the switch control portion 165.

The switch control portion 165 outputs a control signal for controlling switching (turning on/off) of each of the charging switches 102 to 104 to each of the charging switch drive circuits 171 to 173 based on the diagnosis results output from the diagnostic portion 1618. During the deterioration diagnosis and the fault diagnosis, when it is determined that there is an abnormality, the gate voltage of a charging switch corresponding to an electricity storage module with the abnormality is controlled, and the control signal is input to a charging switch drive circuit of the charging switch corresponding to the electricity storage module with the abnormality from the switch control portion 165 so as to turn off the charging switch with respect to the electricity storage module with the abnormality. During the diagnosis of voltage variation and the diagnosis of current variation, when it is determined that the variation is large, the gate voltage of a charging switch corresponding to an electricity storage module with the large variation is controlled, and the control signal is input to a charging switch drive circuit of the charging switch corresponding to the electricity storage module with an abnormality from the switch control portion 165 so as to turn off the charging switch with respect to the electricity storage module with the large variation or to limit the current using the charging switch.

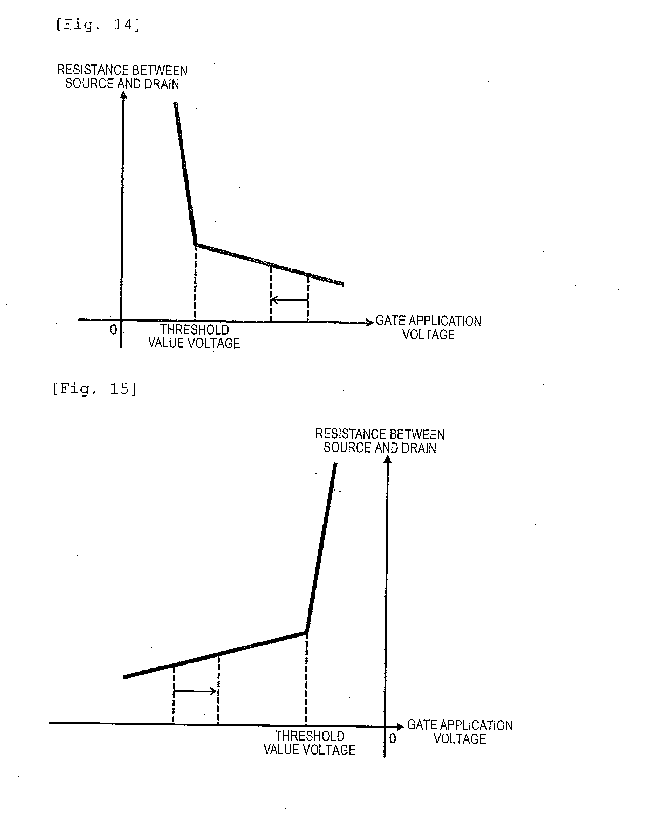

Here, the charging switches 102 to 104 are Nch-type field-effect transistors, and therefore, a gate voltage greater than or equal to a positive threshold value with a source as a reference may be applied to a gate as shown in Fig. 14 in order to turn on the charging switches 102 to 104. When the gate voltage greater than or equal to the positive threshold value is applied to the gate, the resistance between a source and a drain becomes small, and a current flows between the source and the drain. In contrast, the gate voltage which has been applied to the gate may be set to be less than the positive threshold value in order to turn off the charging switches 102 to 104. When the gate voltage less than the positive threshold value is applied to the gate, the resistance between the source and the drain becomes great, and the current does not flow between the source and the drain. The level of the gate voltage greater than or equal to the positive threshold value with the source as a reference may be changed in order to limit the current using the charging switches 102 to 104. For example, as shown with the arrow in Fig. 14, when the gate voltage greater than or equal to the positive threshold value with the source as a reference is made small, the resistance between the source and the drain becomes large, and therefore, it is possible to restrict the current flowing between the source and the drain.

(Operation of Electricity Storage Unit)

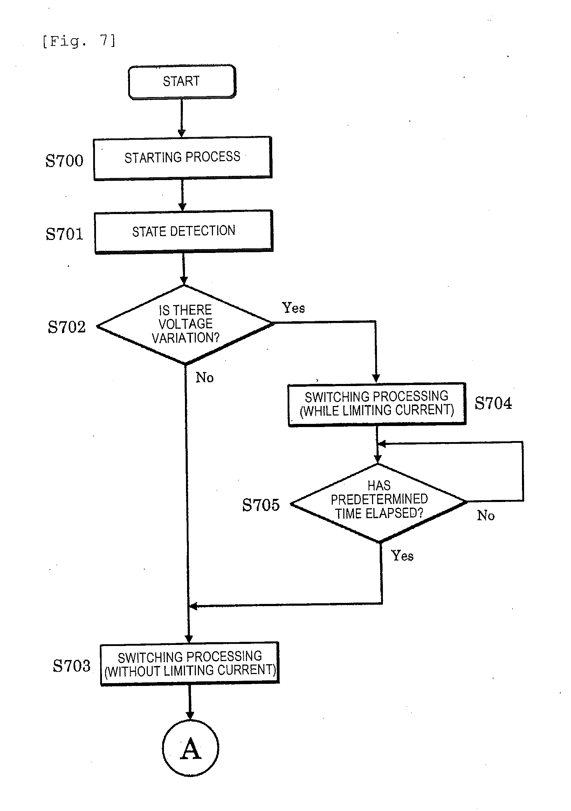

Next, an operation of the electricity storage unit 100 will be described with reference to Figs. 7 to 9.

(Step S700)

When the power control circuit 80 outputs a starting command to the electricity storage control circuit 160 based on the starting command from the central control device 6, operation power source is started by the input starting command in the electricity storage control circuit 160, and power is supplied to a semiconductor device such as a microprocessor, from the operation power source. Accordingly, the electricity storage control circuit 160 is operated. At this time, the discharging switch 101 and the charging switches 102 to 104 are turned off.

(Step S701)

When the electricity storage control circuit 160 is operated, the electricity storage control circuit detects the states of the discharging switch 101 and the charging switches 102 to 104 in a state where they are turned off. As the state detection, open (-circuit) voltages at both ends of each of the electricity storage modules 120 to 140 are obtained. The electricity storage control circuit 160 calculates the open (-circuit) voltages at both ends of each of the electricity storage modules 120 to 140 in the voltage arithmetic portion 1612, based on the voltage detected by the voltage detection portion 163. The calculated open (-circuit) voltages are input from the voltage arithmetic portion 1612 to the diagnostic portion 1618.

(Step S702)

In the diagnostic portion 1618, diagnosis of voltage variation is performed based on the calculated open (-circuit) voltages in Step S702, and the result is output to switch control portion 165. When the result of the diagnosis of voltage variation is negative (No) indicating that there is no voltage variation, the process proceeds to Step S703, and when the result thereof is positive (Yes) indicating that there is voltage variation, the process proceeds to Step S704.

(Step S703)

When the result of the diagnosis of voltage variation is negative (No) indicating that there is no voltage variation, the switch control portion 165 outputs a control command for turn-on to each of the charging switch drive circuits 171 to 173 and subsequently outputs a control command for turn-on to the discharging switch drive circuit 170 such that the charging switches 102 to 104 are turned on and the discharging switch 101 is subsequently turned on. At this time, the limitation of the current using the charging switches 102 to 104 is not performed. Accordingly, the electricity storage pack 110 starts charging/discharging without performing the limitation of currents of the electricity storage modules 120 to 140.

Then, the process proceeds to Step S706.

(Step S704)

When the result of the diagnosis of voltage variation is positive (Yes) indicating that there is voltage variation, the switch control portion 165 outputs a control command for turn-on to each of the charging switch drive circuits 171 to 173 such that the charging switches 102 to 104 are turned on. The switch control portion outputs a control command for turn-on to each of the charging switch drive circuits 171 to 173 such that the current of an electricity storage module with the lowest potential is limited with respect to a charging switch corresponding to the electricity storage module with the lowest potential of which the potential difference from that of an electricity storage module with the highest potential is large, and that the current of remaining electricity storage modules is not limited with respect to charging switches corresponding to the remaining electricity storage modules. Accordingly, a gate voltage, which is input to a gate of the charging switch corresponding to the electricity storage module with the lowest potential of which the potential difference from that of an electricity storage module with the highest potential is large, becomes smaller than gate voltages which are input to gates of other charging switches. Therefore, it is possible to limit the current of the electricity storage module with the lowest potential of which the potential difference from that of the electricity storage module with the highest potential is large, using the charging switch corresponding to the electricity storage module with the lowest potential of which the potential difference from that of the electricity storage module with the highest potential is large. As a result, even if an inrush current (cross current) tends to flow to the electricity storage module with the lowest potential of which the potential difference from that of the electricity storage module with the highest potential is large, due to the charging switches 102 to 104 being turned on and the electricity storage modules 120 to 140 being electrically connected, it is possible to limit the current flowing to the electricity storage module so as not to exceed the allowable current of the power storage device 11, and therefore, to protect the power storage device 11 from the inrush current (cross current).

Then, the process proceeds to Step S705.

(Step S705)

In Step S705, it is determined whether the time during which the current has been limited using the charging switch corresponding to the electricity storage module with the lowest potential of which the potential difference from that of the electricity storage module with the highest potential is large is more than a predetermined elapsed time. When the result is negative (No) indicating that the time during which the current is limited is not over the predetermined elapsed time, determination of whether the time during which the current is limited is over the predetermined elapsed time is repeatedly performed. In contrast, when the result is positive (Yes) indicating that the time during which the current is limited is over the predetermined elapsed time, the process proceeds to Step S703.

When the process proceeds to Step S703, the switch control portion 165 makes the gate voltage, which is input to the gate of the charging switch corresponding to the electricity storage module with the lowest potential of which the potential difference from that of an electricity storage module with the highest potential is large, be the same as the gate voltages which are input to gates of other charging switches. Moreover, the switch control portion releases the limitation of the current of the electricity storage module with the lowest potential of which the potential difference from that of the electricity storage module with the highest potential is large, using the charging switch corresponding to the electricity storage module with the lowest potential of which the potential difference from that of an electricity storage module with the highest potential is large.

In addition, the switch control portion 165 outputs a control command for turn-on to the discharging switch drive circuit 170 such that the discharging switch 101 is turned on. Accordingly, the electricity storage pack 110 starts the charging/discharging.

(Step S706)

When the charging/discharging of the electricity storage pack 110 is started, the electricity storage control circuit 160 performs the state detection. As the state detection, the state of health (deterioration) of each of the electricity storage modules 120 to 140 is estimated, the state of charge of each of the electricity storage modules 120 to 140 is estimated, and the absolute charge/discharge current of each of the electricity storage modules 120 to 140 is calculated. The detection results are input to the diagnostic portion 1618.

Then, the process proceeds to Step S707.

(Step S707)

In the diagnostic portion 1618, deterioration diagnosis and fault diagnosis are performed based on the state of health (deterioration) of each of the electricity storage modules 120 to 140 and the state of charge of each of the electricity storage modules 120 to 140. When the result is positive (Yes) indicating that there is a power storage device 11 which has become deteriorated or with a fault in any of the electricity storage modules 120 to 140, the process proceeds to Step S708, and when the result is negative (No) indicating that there is no power storage device 11 which has become deteriorated or with a fault therein, the process proceeds to Step S709.

(Step S709)

When the result of the deterioration diagnosis and the fault diagnosis is negative (No) indicating that there is a power storage device 11 which has become deteriorated or with a fault, the diagnostic portion 1618 performs the diagnosis of current variation based on the absolute charge/discharge current of each of the electricity storage modules 120 to 140. When the result is positive (Yes) indicating that there is current variation between the electricity storage modules 120 to 140, the process proceeds to Step S710, and when the result is negative indicating that there is no current variation, the process returns to Step S706 and the state detection is performed.

(Step S710)

When the result of the diagnosis of current variation is positive (Yes) indicating that there is current variation, the switch control portion 165 outputs a control command so as to limit a charge/discharge current with respect to a charging switch drive circuit of a charging switch corresponding to an electricity storage module, through which a charge/discharge current greater than or equal to a charge/discharge current threshold value flows, between the electricity storage modules 120 to 140.

As described with reference to Fig. 14, in the Nch-type field-effect transistor constituting the charging switches 102 to 104, when the gate voltage input to the gate is made small as shown with the arrow in Fig. 14, the resistance between the source and drain becomes large, and therefore, it is possible to restrict the current flowing between the source and drain. Accordingly, the switch control portion 165 outputs a control command to a charging switch drive circuit of the charging switch drive circuit of the charging switch corresponding to the electricity storage module, through which a charge/discharge current greater than or equal to the charge/discharge current threshold value flows, such that the gate voltage input to the charging switch from the charging switch drive circuit becomes smaller.

In this manner, it is possible to reduce the variation in the charge/discharge currents with respect to other electricity storage modules by restricting the charge/discharge current of the electricity storage module through which a charge/discharge current greater than or equal to the charge/discharge current threshold value flows, and to suppress widening of the variation in the deterioration (life) of the power storage device 11 between the electricity storage modules 120 to 140.

Then, the process returns to Step S706.

(Step S708)

When the result of the deterioration diagnosis and the fault diagnosis is positive (Yes) indicating that there is a power storage device 11 which has become deteriorated or with a fault, the switch control portion 165 outputs a control command to a charging switch drive circuit of a charging switch corresponding to an electricity storage module including the power storage device 11 which has become deteriorated or with a fault such that the charging switch is turned off. Accordingly, the electricity storage module including the power storage device 11 which has become deteriorated or with a fault is separated from other electricity storage modules and enters a state of not being able to be charged.

Accordingly, it is possible to prevent overcharge with respect to the power storage device 11 which has become deteriorated or with a fault by limiting the charging of the electricity storage module including the power storage device 11 which has become deteriorated or with a fault, and to secure safety of the electricity storage pack 110.

Then, the process proceeds to Step S711.

(Step S711)

When it is determined that there is a power storage device 11 which has become deteriorated or with a fault as a result of the deterioration diagnosis and the fault diagnosis, and when the electricity storage module including the power storage device 11 which has become deteriorated or with a fault is separated from other electricity storage modules by the switch control portion 165, the electricity storage control circuit 160 (diagnostic portion 1618) outputs an abnormal signal to the power control circuit 80. In addition, the electricity storage control circuit 160 lights up a warning lamp (not shown in the drawing) which is attached to the electricity storage unit 100. The power control circuit 80 notifies the central control device 6 of information that there is an abnormality in the electricity storage unit 100 of the power source unit to which the electricity storage unit itself belongs, based on the abnormal signal which is output from the electricity storage control circuit 160, and waits for an instruction from the central control device 6.

The central control device 6 outputs commands, such as a pause command of whether to pause the power source unit, or an replace command of whether to replace the power storage device 11 in the electricity storage unit 100, to the power control circuit 80 of the power source unit with an abnormality, in accordance with the operational state of the power source device 1 and the contents of the abnormality. The power control circuit 80 gives an instruction for pause or replace to the electricity storage control circuit 160 by receiving the command from the central control device 6.

Then, the process proceeds to Step S712.

(Step S712)

In Step S712, it is determined whether there is a pause command from the central control device 6, and when the determination is positive (Yes) indicating that there is a pause command, the process proceeds to Step S713, and when the determination is negative (No) indicating that there is no pause command, the process proceeds to Step S714.

(Step S713)

When the result of the determination of whether there is a pause command from the central control device 6 is positive (Yes) indicating that there is a pause command, the switch control portion 165 outputs a control command to the discharging switch drive circuit 170 and the charging switch drive circuits 171 to 173 such that all of the discharging switch 101 and the charging switches 102 to 104 are turned off. Accordingly, all of the discharging switch 101 and the charging switches 102 to 104 are turned off.

Then, the process proceeds to Step S715.

(Step S714)

In Step S714, it is determined whether there is an replace command from the central control device 6, and when the determination is positive (Yes) indicating that there is an replace command, the process proceeds to Step S716, and when the determination is negative (No) indicating that there is no replace command, the process returns to Step S706. The processing after the Step S706 is repeated. In this case, the electricity storage unit 100 continues the operation in the remaining electricity storage modules which do not include the power storage device 11 which has become deteriorated or with a fault.

(Step S715)

In Step 715, it is determined whether there is an replace command from the central control device 6, and when the determination is positive (Yes) indicating that there is an replace command, the process proceeds to Step S716, and when the determination is negative (No) indicating that there is no replace command, the control flow ends.

(Step S716)

When the result of the determination of whether there is a replace command is positive (Yes) indicating that there is a replace command, processing for replacing the power storage device 11, which has become deteriorated or with a fault, in a state where the electricity storage unit 100 is stopped is executed, and the control flow ends. The replace of the power storage device 11 which has become deteriorated or with a fault is performed with an electricity storage block or an electricity storage module which includes the power storage device 11 which has become deteriorated or with a fault, as a unit, by hand.

(Step S716)

When the result of determination of whether there is an replace command is positive (Yes) indicating that there is an replace command, processing for replacing the power storage device 11 which has become deteriorated or with a fault in a state where other electricity storage modules which do not include the power storage device 11 which has become deteriorated or with a fault are operated is performed. After the completion of the replace, processing for electrically connecting the electricity storage module which includes the replaced power storage device 11 to other electricity storage modules which have been operated, for example, processing for making voltages at both ends of all of the electricity storage modules be the same as each other while limiting the current using a charging switch corresponding to the electricity storage module which includes the replaced power storage device 11, or charging switches corresponding to other electricity storage modules, or the like is executed, and is shifted to an ordinary operation. The replace of the power storage device 11 which has become deteriorated or with a fault is performed with an electricity storage block or an electricity storage module which includes the power storage device 11 which has become deteriorated or with a fault, as a unit, by hand.
Then, the process returns to Step S706, and the processing after Step S706 is repeated.

Example 2

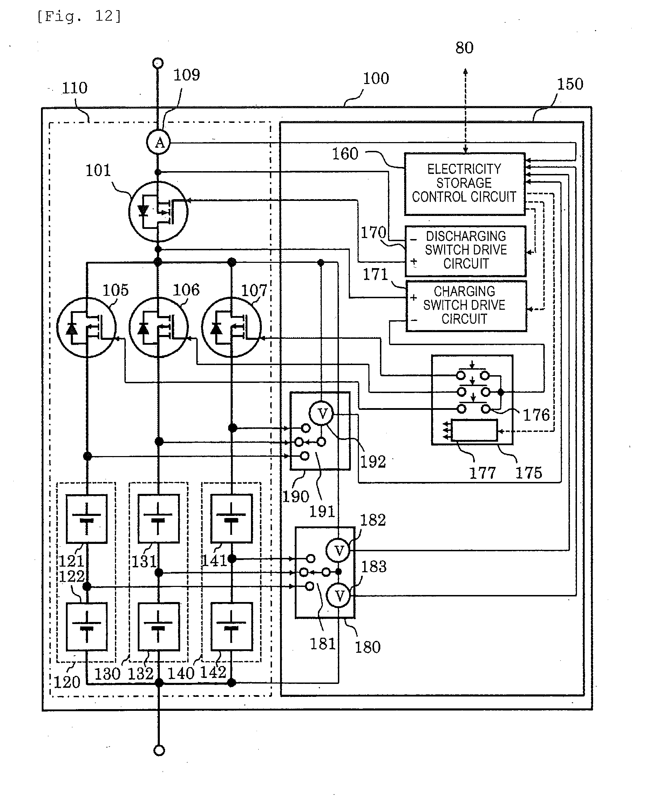

A second example will be described with reference to Fig. 12.
The second example is a modification example of the first example, and as shown in Fig. 12, a charging switch 105 corresponding to an electricity storage module 120, a charging switch 106 corresponding to an electricity storage module 130, and a charging switch 106 corresponding to an electricity storage module 140 are configured using Pch-type field effect transistors. The charging switches 105 to 107 are respectively driven by driving signals (negative gate voltage with sources of the charging switches 105 to 107 as references) which are output from one charging switch drive circuit 171 which is commonly provided in the charging switches 105 to 107.
Here, the charging switches 105 to 107 are Pch-type field-effect transistors, and therefore, a gate voltage greater than or equal to a negative threshold value with a source as a reference may be applied to a gate as shown in Fig. 15 in order to turn on the charging switches 105 to 107. When the gate voltage greater than or equal to the negative threshold value is applied to the gate, the resistance between a source and a drain becomes small, and a current flows between the source and the drain. In contrast, the gate voltage which has been applied to the gate may be set to be less than the negative threshold value in order to turn off the charging switches 105 to 107. When the gate voltage less than the negative threshold value is applied to the gate, the resistance between the source and the drain becomes great, and the current does not flow between the source and the drain. The level of the gate voltage greater than or equal to the negative threshold value with the source as a reference may be changed in order to limit the current using the charging switches 105 to 107. For example, as shown with the arrow in Fig. 15, when the gate voltage greater than or equal to the negative threshold value with the source as a reference is made small, the resistance between the source and the drain becomes large, and therefore, it is possible to restrict the current flowing between the source and the drain.
Sources of the charging switches 105 to 107 are electrically connected to a source of the discharging switch 101 which is an Nch-type field-effect transistor. Drains of the charging switches 105 to 107 are electrically connected to a positive electrode side of corresponding electricity storage modules.

The Pch-type field effect transistor may be used as the discharging switch 101 similarly to the charging switches 105 to 107. However, with the use of the Nch-type field-effect transistor, it is possible to reduce the threshold value of the positive gate voltage with a source, for turning on the discharging switch 101, as a reference, compared to the use of the Pch-type field effect transistor.

A selection switch circuit 175 that outputs a driving signal (gate voltage), which is output from the charging switch drive circuit 171, by selecting any of the charging switches 105 to 107 is provided between the charging switches 105 to 107 and the charging switch drive circuit 171. The selection switch circuit 175 is provided corresponding to each of the charging switches 105 to 107, and is provided with a switching element (semiconductor switching element such as a field effect transistor) 176 of which one end is electrically connected to a gate of a corresponding charging switch and the other end is electrically connected to a negative side of the charging switch drive circuit 171; and a drive circuit 177 that outputs a driving signal for switching (turning on/off) the switching element 176, to the switching element 176. The selection of the selection switch circuit 175 is controlled by a control command which is output from an electricity storage control circuit 160 (switch control portion).

Other configurations are the same as those of the first example, and therefore, components having the same configurations as those of the first example are given the same reference numerals as those of the first example, and the description thereof will not be repeated.

In the second example described above, the number of respective charging switch drive circuits which have been independently provided for the plurality of charging switches are set to one charging switch drive circuit 171 in common with the charging switches 105 to 107. Therefore, it is possible to reduce the number of the charging switch drive circuits 171. In the second example, the number of the charging switch drive circuits is reduced and the selection switch circuit 175 is newly added thereto. However, in the second example, it is possible to reduce the production cost even if the cost of newly adding the selection switch circuit 175 thereto is subtracted from the reduced cost of reducing the number of the charging switch drive circuits.

Example 3

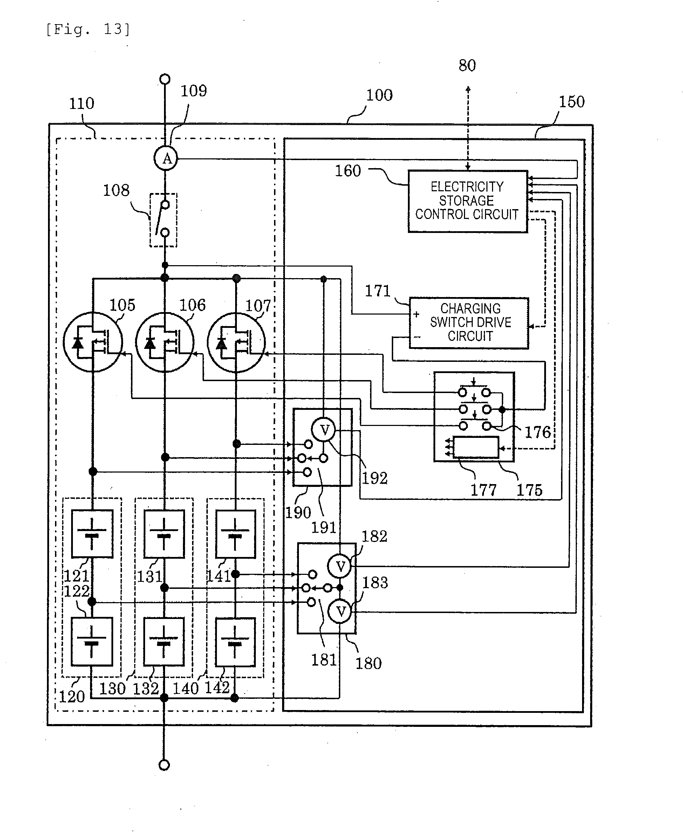

A third example will be described with reference to Fig. 13.

The third example is an improved example of the second example, and as shown in Fig. 13, a mechanical switch 108 is used as the discharging switch. In this manner, it is possible to reduce the number of discharging switch drive circuits using the mechanical switch 108.

Other configurations are the same as those of the second example, and therefore, components having the same configurations as those of the second example are given the same reference numerals as those of the second example, and the description thereof will not be repeated.

In the third example described above, it is possible to further reduce the product cost as much as the reduced number of discharging switch drive circuits.

**Claims**

1. A power source device comprising:

an electricity storage portion which is constituted of a plurality of power storage devices electrically connected to each other and includes a mode of a first power storage device group constituted of the plurality of power storage devices that are electrically connected to each other in series or in parallel, or in series and parallel, and a mode of a second power storage device group further constituted of a plurality of the first power storage device groups that are electrically connected to each other in parallel, as modes of the electrical connection;
first and second current control switches which are provided in the electricity storage portion; and
a control portion which is provided with first and second control means for controlling an operation of the first and second current control switches,
wherein the first current control switch is provided corresponding to each of the plurality of first power storage device groups so as to limit a current flowing in a direction toward each of the plurality of first power storage device group, and
the number of the second current control switches is less than that of the first current control switches, and the second current control switch is provided corresponding to a power storage device group which includes the second power storage device group and has a greater number of the power storage devices than the first power storage device group so as to control the current flowing in a direction opposite to the direction toward the plurality of the first power storage device groups.

**2.** The power source device according to claim 1,
wherein the electricity storage portion includes a mode of a third power storage device group further constituted of a plurality of the second power storage device groups that are electrically connected to each other in parallel, as a mode of the electrical connection.

**3.** The power source device according to claim 2,
wherein the first power storage device group indicates a unit for protecting a predetermined number of power storage devices constituting the first power storage device group from the current flowing in the direction toward the first power storage device group, using the first current control switch, and
the second power storage device group indicates a unit for separating the second power storage device group from the third power storage device group.

**4.** The power source device according to any one of claims 1 to 3,
wherein the plurality of first current control switches are constituted of an N-type field-effect transistor.

**5.** The power source device according to any one of claims 1 to 3,
wherein the plurality of first current control switches are constituted of a P-type field effect transistor.

**6.** The power source device according to claim 5, further comprising:

a driving circuit that drives the plurality of first current control switches,
wherein the driving circuit is commonly provided for the plurality of first current control switches.

**7.** The power source device according to any one of claims 4 to 6,
wherein each of the plurality of first current control switches is electrically connected to a positive electrode side of the corresponding first power storage device group.

**8.** The power source device according to any one of claims 1 to 7,
wherein the second current control switch is constituted of an N-type field-effect transistor.

**9.** The power source device according to claim 8,
wherein the N-type field-effect transistor is electrically connected to a positive electrode side of the second power storage device group.

**10.** The power source device according to claim 8,
wherein the second current control switch is constituted of a mechanical switch.

[Fig. 1]

EP 2 963 728 A1

[Fig. 2]

<u>31</u>

30

[Fig. 3]

MODULATED WAVE

(A) WAVEFORM POTENTIAL LEVEL

POSITIVE

0

CARRIER FOR POWER SOURCE UNIT A
CARRIER FOR POWER SOURCE UNIT B
CARRIER FOR POWER SOURCE UNIT C
CARRIER FOR POWER SOURCE UNIT D

(B) OUTPUT VOLTAGE OF POWER SOURCE UNIT A

POSITIVE

0

(C) OUTPUT VOLTAGE OF POWER SOURCE UNIT B

POSITIVE

0

(D) OUTPUT VOLTAGE OF POWER SOURCE UNIT C

POSITIVE

0

(E) OUTPUT VOLTAGE OF POWER SOURCE UNIT D

POSITIVE

0

(F) OUTPUT VOLTAGE OF POWER SOURCE STRINGS

POSITIVE

0

0

TIME

[Fig. 4]

[Fig. 5]

[Fig. 6]

[Fig. 7]

```
                    ┌──────────────┐
                    │    START     │
                    └──────────────┘
                           │
                           ▼
   S700          ┌──────────────────────┐
                 │   STARTING PROCESS   │
                 └──────────────────────┘
                           │
                           ▼
   S701          ┌──────────────────────┐
                 │   STATE DETECTION    │
                 └──────────────────────┘
                           │
                           ▼
                       ╱────────╲                Yes
   S702              ╱  IS THERE   ╲──────────────────────┐
                     ╲   VOLTAGE   ╱                       │
                      ╲ VARIATION?╱                        │
                       ╲────────╱                          │
                           │ No                            ▼
                           │                ┌───────────────────────────┐
                           │                │   SWITCHING PROCESSING    │  S704
                           │                │ (WHILE LIMITING CURRENT)  │
                           │                └───────────────────────────┘
                           │                            │
                           │                            ▼
                           │                        ╱────────╲
                           │                      ╱    HAS     ╲
                           │             S705    ╲ PREDETERMINED╱     No
                           │                      ╲TIME ELAPSED?╱──────┐
                           │                        ╲────────╱         │
                           │                           │ Yes           │
                           │                           │               │
                           │◄──────────────────────────┘               │
                           │                                           │
                           ▼
   S703          ┌───────────────────────────┐
                 │   SWITCHING PROCESSING    │
                 │ (WITHOUT LIMITING CURRENT)│
                 └───────────────────────────┘
                           │
                           ▼
                         ( A )
```

[Fig. 8]

```
                    ┌─────┐
                    │  A  │
                    └─────┘
                       │
                       ▼
S706    ┌──────────────────────────┐
        │     STATE DETECTION       │
        └──────────────────────────┘
                       │
                       ▼
               ╱─────────────╲
              ╱   IS THERE     ╲       No
S707        ╱ CELL WHICH HAS BECOME╲ ──────────┐
            ╲ DETERIORATED OR WITH ╱           │
             ╲      FAULT?        ╱            │
               ╲─────────────╱                 │
                      │                         │
                     Yes                        ▼
                      │                 S709  ╱─────────────╲
                      ▼                      ╱      IS        ╲    No
S708  ┌──────────────────────────┐         ╱ CURRENT GREATER  ╲ ──────┐
      │  SWITCHING PROCESSING      │        ╲ THAN PRESCRIBED  ╱       │
      │ (CORRESPONDING SWITCH      │         ╲    RANGE?      ╱        │
      │   IS TURNED OFF)           │           ╲─────────────╱         │
      └──────────────────────────┘                  │                  │
                      │                             Yes      S710       │
                      ▼                              │                  │
                  ┌─────┐              ┌──────────────────────────┐    │
                  │  B  │              │  SWITCHING PROCESSING      │    │
                  └─────┘              │ (CURRENT RESTRICTION)      │    │
                                       └──────────────────────────┘    │
                                                     │                  │
                                                     └──────────────────┤
                                                                        │
                                                                  ┌─────┐
                                                                  │  C  │
                                                                  └─────┘
```

[Fig. 9]

Flowchart:

B

S711 — WARNING INSTRUCTION

S712 — IS THERE PAUSE COMMAND?
→ No → S714 — IS THERE REPLACE COMMAND?
→ Yes (down)

S713 — SWITCHING PROCESSING (ALL SWITCHES ARE TURNED OFF)

S715 — IS THERE REPLACE COMMAND?
No → END
Yes →

S716 — REPLACE PROCESSING (STOP)

S714 — IS THERE REPLACE COMMAND?
No → C
Yes →

S717 — REPLACE PROCESSING (NON-STOP) → C

END

[Fig. 10]

DC INTERNAL RESISTANCE DCR

DETERIORATION DEGREE
BECOMES LARGER

STATE OF DETERIORATION SOH

[Fig. 11]

OPEN VOLTAGE OCV

CHARGE
TERMINATION
VOLTAGE

DISCHARGE
TERMINATION
VOLTAGE

0%    STATE OF CHARGE SOC    100%

[Fig. 12]

[Fig. 13]

[Fig. 14]

RESISTANCE BETWEEN
SOURCE AND DRAIN

0  THRESHOLD
VALUE VOLTAGE
GATE APPLICATION
VOLTAGE

[Fig. 15]

RESISTANCE BETWEEN
SOURCE AND DRAIN

THRESHOLD
VALUE VOLTAGE
0  GATE APPLICATION
VOLTAGE

<table>
<tr><td colspan="2" align="center">**INTERNATIONAL SEARCH REPORT**</td><td>International application No.<br>PCT/JP2013/054837</td></tr>
</table>

| A. CLASSIFICATION OF SUBJECT MATTER |
|---|
| *H01M10/44*(2006.01)i, *H02J7/00*(2006.01)i |

According to International Patent Classification (IPC) or to both national classification and IPC

| B. FIELDS SEARCHED |
|---|

Minimum documentation searched (classification system followed by classification symbols)
H01M10/44, H02J7/00

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 10-23678 A (Sony Corp.),<br>23 January 1998 (23.01.1998),<br>entire text; all drawings<br>(Family: none) | 1-10 |
| A | WO 2012/053426 A1 (Sanyo Electric Co., Ltd.),<br>26 April 2012 (26.04.2012),<br>entire text; all drawings<br>& KR 10-2012-0094529 A | 1-10 |
| A | WO 2012/160754 A1 (Panasonic Corp.),<br>29 November 2012 (29.11.2012),<br>entire text; all drawings<br>(Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>15 March, 2013 (15.03.13) | Date of mailing of the international search report<br>26 March, 2013 (26.03.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/054837 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2012-132985 A  (NEC Energy Devices, Ltd.), 04 October 2012 (04.10.2012), entire text; all drawings (Family: none) | 1-10 |

Form PCT/ISA/210 (continuation of second sheet) (July 2009)

**EP 2 963 728 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007166715 A